# EUROPÄISCHE PATENTSCHRIFT

(11) **EP 3 631 884 B1**
(45) Veröffentlichungstag und Bekanntmachung des Hinweises auf die Patenterteilung: **13.10.2021**
(21) Anmeldenummer: 18733181.4
(22) Anmeldetag: 30.05.2018
(51) Int. Cl.: H01M 8/0206, H01M 8/0258, H01M 8/0267, H01M 8/2483, H01M 8/0271, H01M 8/0273, H01M 8/0276, H01M 8/1018

(54) **SEPARATORPLATTE FÜR EIN ELEKTROCHEMISCHES SYSTEM**
SEPARATOR PLATE FOR AN ELECTRO-CHEMICAL SYSTEM
PLAQUE DE SÉPARATION POUR UN SYSTÈME ÉLECTROCHIMIQUE

(30) Priorität: 30.05.2017 DE 202017103229 U
(43) Veröffentlichungstag der Anmeldung: 08.04.2020
(73) Patentinhaber: REINZ-Dichtungs-GmbH, 89233 Neu-Ulm (DE)
(72) Erfinder: STÖHR, Thomas, 88471 Laupheim (DE); KUNZ, Claudia, 89073 Ulm (DE)
(74) Vertreter: Pfenning, Meinig & Partner mbB
(86) Internationale Anmeldenummer: PCT/EP2018/064278
(87) Internationale Veröffentlichungsnummer: WO 2018/220065

(56) Entgegenhaltungen:
- EP-A1- 3 171 440
- DE-B3-102007 048 184
- US-A1- 2005 100 771

## Beschreibung

Die Erfindung betrifft eine Separatorplatte für ein elektrochemisches System, eine Bipolarplatte, die die Separatorplatte enthält, sowie ein elektrochemisches System mit einer Vielzahl von Bipolarplatten. Bei dem elektrochemischen System kann es sich beispielsweise um ein Brennstoffzellensystem, einen elektrochemischen Kompressor, eine Redox-Flow-Batterie oder um einen Elektrolyseur handeln.

Bekannte elektrochemische Systeme umfassen normalerweise einen Stapel elektrochemischer Zellen, die jeweils durch Bipolarplatten voneinander getrennt sind. Solche Bipolarplatten können z. B. der elektrischen Kontaktierung der Elektroden der einzelnen elektrochemischen Zellen (z. B. Brennstoffzellen) und/oder der elektrischen Verbindung benachbarter Zellen dienen (Serienschaltung der Zellen). Typischerweise sind die Bipolarplatten aus zwei zusammengefügten einzelnen Separatorplatten gebildet. Die Separatorplatten der Bipolarplatte können stoffschlüssig zusammengefügt sein, z. B. durch eine oder mehrere Schweißverbindungen, insbesondere durch eine oder mehrere Laserschweißverbindungen.

Die Bipolarplatten bzw. die Separatorplatten können jeweils Strukturen aufweisen oder bilden, die z. B. zur Versorgung der zwischen benachbarten Bipolarplatten angeordneten elektrochemischen Zellen mit einem oder mehreren Medien und/oder zum Abtransport von Reaktionsprodukten ausgebildet sind. Bei den Medien kann es sich um Brennstoffe (z. B. Wasserstoff oder Methanol) oder um Reaktionsgase (z. B. Luft oder Sauerstoff) handeln. Ferner können die Bipolarplatten bzw. die Separatorplatten zum Führen eines Kühlmediums durch die Bipolarplatte dienen, insbesondere durch einen von den Separatorplatten der Bipolarplatte eingeschlossenen Hohlraum. Üblicherweise wird Brennstoff oder Reaktionsgas auf der ersten Seite der Separatorplatte, die oftmals trotz ihrer Strukturen auch als erste Flachseite bezeichnet wird, geführt, während Kühlmedium auf der zweiten Flachseite einer Separatorplatte geführt wird. Der Hohlraum bildet sich dann zwischen den zweiten Flachseiten zweier Separatorplatten aus. Ferner können die Bipolarplatten zum Weiterleiten der bei der Umwandlung elektrischer bzw. chemischer Energie in der elektrochemischen Zelle entstehenden Abwärme sowie zum Abdichten der verschiedenen Medien- bzw. Kühlkanäle gegeneinander und/oder nach außen ausgebildet sein.

Zwischen dem aktiven Bereich und einer den aktiven Bereich nach außen begrenzenden Sicke können Barriereelemente vorgesehen sein, die derart angeordnet und ausgebildet sind, dass sie einen Fluss von Reaktionsmedium vorbei am aktiven Bereich reduzieren oder unterbinden. Beispielsweise können derartige Barriereelemente dadurch gebildet werden, dass in der Separatorplatte Überstände, die auf der Seite des Reaktionsmediums über die daran angrenzenden Bereiche der Separatorplatte aufragen, vorgesehen werden.

Ferner weisen die Bipolarplatten üblicherweise jeweils wenigstens eine oder mehrere Durchgangsöffnungen auf. Durch die Durchgangsöffnungen hindurch können die Medien und/oder die Reaktionsprodukte zu den zwischen benachbarten Bipolarplatten des Stapels angeordneten elektrochemischen Zellen oder in den von den Separatorplatten der Bipolarplatte gebildeten Hohlraum geleitet oder von Zellen bzw. aus dem Hohlraum abgeleitet werden. Die elektrochemischen Zellen umfassen typischerweise außerdem jeweils eine oder mehrere Membran-Elektrodeneinheiten (Membrane Electrode Assemblies bzw. MEA). Die MEA können eine oder mehrere Gasdiffusionslagen aufweisen, die üblicherweise zu den Bipolarplatten hin orientiert und z. B. als Metall- oder Kohlenstoffvlies ausgebildet sind.

Es hat sich in Einzelfällen als problematisch erwiesen, dass beispielsweise Kühlmedium auf der von der elektrochemisch aktiven Seite abgewandten Seite der Separatorplatten, z. B. in dem von den beiden Separatorplatten einer Bipolarplatte eingeschlossenen Hohlraum, teilweise auf unerwünschten Wegen geführt wird. So kann es z. B. dazu kommen, dass das Kühlmedium, das vornehmlich der Kühlung des elektrochemisch aktiven Bereichs der Separatorplatte bzw. der Bipolarplatte dient, wenigstens teilweise am aktiven Bereich oder gar schon an Teilen des Verteilbereichs vorbeigeführt wird und damit nicht oder nur in ungenügendem Maße zur Kühlung des aktiven Bereichs beiträgt. Insbesondere bei geprägten Separatorplatten werden die vorgenannten Barriereelemente dadurch gebildet, dass Prägungen in Richtung der ersten Flachseite eingebracht werden. Diese resultieren aber in Hohlräumen auf der zweiten Flachseite der jeweiligen Separatorplatte und können zusätzliche Fließwege für Kühlmedium bilden. Hierdurch wird die Gefahr vergrößert, dass Kühlmedium auf unerwünschten Wegen am aktiven Bereich vorbeifließt.

Infolge dieses ungewollten Kühlmittel-Bypasses kann es zu unerwünschten Temperaturspitzen im Bereich der elektrochemischen Zellen und/oder zu unerwünschten Druckverlusten bei der Kühlmittelführung kommen. Zudem ist zur Förderung des am aktiven Bereich vorbeigeführten Kühlmediums eine erhöhte Pumpleistung erforderlich. All diese unerwünschten Effekte können den Wirkungsgrad des elektrochemischen Systems gegebenenfalls negativ beeinflussen.

Um diesen unerwünschten Kühlmittel-Bypass ganz oder wenigstens teilweise zu unterbinden, wurden im Dokument DE202014008157U1 Füllungen vorgeschlagen, die z. B. im Randbereich des aktiven Bereichs zwischen den Einzelplatten der Bipolarplatte angeordnet sind, um das Vorbeiströmen von Kühlmedium an der Rückseite des elektrochemisch aktiven Bereichs zu verhindern. Dennoch besteht weiterhin Bedarf an Separatorplatten oder Bipolarplatten für ein elektrochemisches System, die ein Betreiben des Systems mit einem möglichst hohen Wirkungsgrad ermöglichen. Weitere Bipolarplatten sind zum Beispiel aus den Druckschriften EP 3 171 440 A1 und DE 10 2007 048 184 B3 bekannt.

Es ist daher die Aufgabe der vorliegenden Erfindung eine Separatorplatte und eine Bipolarplatte für ein elektrochemisches System zur Verfügung zu stellen, die einen Betrieb des Systems mit möglichst hohem Wirkungsgrad ermöglichen.

Diese Aufgabe wird gelöst durch eine Separatorplatte gemäß Anspruch 1, durch eine Bipolarplatte, die eine derartige Separatorplatte enthält, sowie durch ein elektrochemisches System mit einer Vielzahl von Bipolarplatten der genannten Art.

Vorgeschlagen wird also eine Separatorplatte für ein elektrochemisches System, insbesondere für eine Bipolarplatte eines elektrochemischen Systems, umfassend:
eine erste Durchgangsöffnung zum Durchleiten eines Kühlmediums durch die Separatorplatte;
einen aktiven Bereich mit Strukturen zum Führen eines Reaktionsmediums entlang einer ersten Flachseite der Separatorplatte und Strukturen zum Führen eines Kühlmediums entlang einer Rückseite des aktiven Bereichs an der zweiten Flachseite der Separatorplatte;
ggf. einen ersten Verteilbereich zum Führen des Kühlmediums zwischen der ersten Durchgangsöffnung und dem aktiven Bereich;
eine einteilig mit der Separatorplatte ausgebildete Sicke zum Abdichten zumindest des aktiven Bereichs; und
einteilig mit der Separatorplatte ausgebildete Barriereelemente, die zwischen dem aktiven Bereich und der Sicke angeordnet sind oder zwischen dem ggf. vorhandenen ersten Verteilbereich und der Sicke angeordnet sind und die derart ausgebildet sind, dass sie einen Fluss von Reaktionsmedium an der ersten Flachseite der Separatorplatte entlang der Sicke und vorbei am aktiven Bereich reduzieren oder unterbinden.

Um das Einströmen von Kühlmedium in einen Innenraum der Sicke an der zweiten Flachseite der Separatorplatte ausgehend von der ersten Durchgangsöffnung ganz oder wenigstens teilweise zu verhindern, verläuft die Sicke derart, dass sie sowohl den aktiven Bereich und den ggf. vorhandenen ersten Verteilbereich als auch die erste Durchgangsöffnung vollständig umschließt. Insbesondere quert die Sicke vorzugsweise nicht den Strömungsweg des Kühlmediums von der ersten Durchgangsöffnung zur Rückseite des aktiven Bereichs. Oft bilden die Barriereelemente an der zweiten Flachseite der Separatorplatte eine unerwünschte Fluidverbindung zwischen der Rückseite des aktiven Bereichs und dem Sickeninnenraum oder zwischen einer Rückseite des ggf. vorhandenen ersten Verteilbereichs und dem Sickeninnenraum, da die Überhöhung auf der ersten Flachseite eine Vergrößerung des Volumens auf der zweiten Flachseite mit sich bringt. Zum Reduzieren oder zum Unterbinden eines Flusses von Kühlmedium zwischen der Rückseite des aktiven Bereichs und dem Innenraum der Sicke und/oder zwischen einer Rückseite des Verteilbereichs und dem Innenraum der Sicke im Bereich der Barriereelemente an der zweiten Flachseite der Separatorplatte ist daher ferner wenigstens eines der Barriereelemente oder sind wenigstens einige der Barriereelemente wenigstens bereichsweise abgesenkt. Durch diese wenigstens bereichsweise Absenkung wenigstens eines der Barriereelemente oder wenigstens einiger der Barriereelemente kann der Querschnitt der unerwünschten Fluidverbindungen verkleinert und der unerwünschte Kühlmittelfluss von der Rückseite des aktiven Bereichs in den Sickeninnenraum oder von der Rückseite des ggf. vorhandenen ersten Verteilbereichs in den Sickeninnenraum reduziert werden. Um einerseits das Risiko des Strömens von Brennstoff bzw. Reaktionsgas auf unerwünschten Wegen auf der ersten Flachseite der Separatorplatte zu minimieren und andererseits das Risiko des Strömens von Kühlmedium auf unerwünschten Wegen auf der zweiten Flachseite der Separatorplatte zu minimieren ist es besonders bevorzugt, dass die Barriereelemente nur bereichsweise abgesenkt sind.

Wie schon kurz erwähnt kann die Separatorplatte auf ihrer Rückseite eine Verteilstruktur zum Verteilen von Kühlmedium auf die Rückseite des aktiven Bereichs oder zum Sammeln von durch die Rückseite des aktiven Bereichs geflossenem Kühlmittel aufweisen. Diese reicht vorzugsweise von der mindestens einen Portsicke bis an den der betreffenden Portsicke zugewandten Rand der Rückseite des aktiven Bereichs. Der von der Verteilstruktur gebildete Verteilbereich kann z. B. quer zur Strömungsrichtung des Kühlmittels entlang der Rückseite des aktiven Bereichs bis an ein der Sicke zugewandtes Ende oder bis an einen der Sicke zugewandten Seitenrand des aktiven Bereichs heranreichen.

Die Separatorplatte kann eine zweite Durchgangsöffnung zum Durchleiten eines Kühlmediums durch die Separatorplatte aufweisen. Zwischen der zweiten Durchgangsöffnung und dem aktiven Bereich kann wiederum ein Verteil- oder Sammelbereich zur Führung des Kühlmediums zur bzw. von der Rückseite des aktiven Bereichs angeordnet sein, der im Folgenden als zweiter Verteilbereich bezeichnet wird. Die Sicke kann dann auch die zweite Durchgangsöffnung vollständig umschließen und somit den aktiven Bereich, den ggf. vorhandenen ersten und/oder zweiten Verteilbereich sowie die erste und zweite Durchgangsöffnung gemeinsam umschließen. Die erste Durchgangsöffnung und die zweite Durchgangsöffnung sind dann vorzugsweise an einander gegenüber liegenden Seiten der Rückseite des aktiven Bereichs angeordnet.

Die Absenkung kann sich wenigstens bei einem oder bei mehreren der Barriereelemente zumindest in einer Richtung über das gesamte Barriereelement erstrecken. Dies erfordert gewöhnlich einen Übergangsbereich, in dem das Material der Separatorplatte von der Ebene des Barriereelements auf die Ebene der Absenkung umgeformt ist, damit ein allzu kleiner Biegewinkel vermieden werden kann.

Die Absenkung kann wenigstens bei einem oder bei mehreren der Barriereelemente von den Rändern des Barriereelements beabstandet sein.

Die Absenkung kann wenigstens bei einem oder bei mehreren der Barriereelemente eine längliche Form haben. Zudem kann die Absenkung parallel oder im Wesentlichen parallel zur Sicke oder zur Haupterstreckungsrichtung der Sicke ausgerichtet sein. Die Haupterstreckungsrichtung der Sicke ist dabei insbesondere so zu verstehen, dass sie die Haupterstreckungsrichtung derjenigen Sicke bzw. desjenigen Sickenabschnitts meint, die/der dem Barriereelement am nächsten liegt.

Die Absenkung ist wenigstens bei einem oder bei mehreren der Barriereelemente derart ausgebildet, dass sie einen senkrecht zur Planflächenebene der Separatorplatte bestimmten Querschnitt einer durch das Barriereelement gebildeten Verbindung zwischen der Rückseite des aktiven Bereichs und dem Innenraum der Sicke an der zweiten Flachseite der Separatorplatte zumindest in einem Abschnitt wenigstens um 50 Prozent, vorzugsweise wenigstens um 70 Prozent, besonders vorzugsweise wenigstens um 90 Prozent reduziert.

Wenigstens eines oder mehrere der Barriereelemente kann bzw. können bis an den aktiven Bereich oder einen Verteilbereich und bis an die Sicke heran reichen. Reicht ein Barriereelement bis an die Sicke heran, kann das Barriereelement als unmittelbarer Fortsatz der Sicke ausgebildet sein, so dass im Bereich des Barriereelements in einer Richtung quer zur Haupterstreckungsrichtung der Sicke die dem aktiven Bereich oder einem Verteilbereich bzw. dem Barriereelement zugewandten Sickenfüße nicht zur Auflage aufeinander kommen. Andererseits ist es bevorzugt, dass zwischen zwei Barriereelementen entlang der Haupterstreckungsrichtung der Sicke Bereiche angeordnet sind, in denen die dem aktiven Bereich bzw. einem der Verteilbereiche zugewandten Sickenfüße zur Auflage aufeinander kommen.

Wenigstens eines oder mehrere der Barriereelemente kann bzw. können wenigstens abschnittweise quer zur Haupterstreckungsrichtung der Sicke ausgerichtet sein.

Wenigstens eines oder mehrere der Barriereelemente kann bzw. können derart ausgebildet sein, dass sich ein senkrecht zur Planflächenebene der Separatorplatte bestimmter Querschnitt des jeweiligen Barriereelements zur Sicke hin verjüngt, und zwar vorzugsweise wenigstens um 50 Prozent, besonders vorzugsweise wenigstens um 70 Prozent. Z. B. kann sich der Querschnitt entlang einer Richtung parallel zur Planflächenebene der Separatorplatte verjüngen, vorzugsweise parallel zur Sicke oder zur Haupterstreckungsrichtung der Sicke. Beispielsweise kann die Verjüngung wenigstens bei einem oder bei mehreren der Barriereelemente stufenartig erfolgen.

Wenigstens einige der einander benachbarten Barriereelemente können miteinander verbunden sein, vorzugsweise jeweils durch eine parallel zur Sicke oder zur Haupterstreckungsrichtung der Sicke ausgerichtete Verbindung.

Die Separatorplatte kann ferner eine erste Portsicke aufweisen, die die erste Durchgangsöffnung vollständig umschließt.

Sofern die Separatorplatte die zuvor beschriebene zweite Durchgangsöffnung aufweist, kann sie ferner eine zweite Portsicke umfassen, die die zweite Durchgangsöffnung vollständig umschließt.

Die mindestens eine Portsicke kann dabei eine Durchführungsstruktur aufweisen, die eine gezielte Passage von Kühlmittel quer zur Portsicke ermöglicht. Solche Strukturen sind etwa aus der DE 102 48 531 B4, DE 20 2015 104 972 U1 und DE 20 2015 104 973 U1 der Anmelderin bekannt.

Die Separatorplatte kann wenigstens eine Absenkung der zuvor beschriebenen Art aufweisen, die sich quer zur Strömungsrichtung des Kühlmediums entlang der Rückseite des aktiven Bereichs durchgehend vom aktiven Bereich oder von einem ggf. vorhandenen Verteilbereich bis zur Sicke erstreckt.

Die Barriereelemente der Separatorplatte können parallel zur Sicke oder zur Haupterstreckungsrichtung der Sicke in einer Reihe angeordnet sein. Die zuvor beschriebene Absenkung, die sich durchgehend vom aktiven Bereich oder einem ggf. vorhandenen Verteilbereich zur Sicke erstreckt, kann dann insbesondere an einem der Verteilstruktur zugewandten Ende dieser Reihe angeordnet sein.

Die Separatorplatte kann wenigstens ein Barriereelement der zuvor genannten Art ohne Absenkung aufweisen.

Die Separatorplatte kann z. B. aus einem Metallblech gebildet sein, vorzugsweise aus einem Edelstahlblech. Die Sicke und/oder die Portsicken, die Strukturen des aktiven Bereichs, die Strukturen eines oder mehrerer ggf. vorhanden Verteilbereichs, die Barriereelemente und die Absenkungen können z. B. in die Separatorplatte eingeprägt sein.

Vorgeschlagen wird ferner eine Bipolarplatte für ein elektrochemisches System mit einer ersten und mit einer zweiten Separatorplatte der zuvor beschriebenen Art, wobei die beiden Separatorplatten miteinander verbunden sind, wobei die ersten Durchgangsöffnungen der beiden Separatorplatten zur Ausbildung einer ersten Durchgangsöffnung der Bipolarplatte fluchtend angeordnet sind, wobei die beiden Separatorplatten einen Hohlraum zum Durchführen eines Kühlmediums durch die Bipolarplatte einschließen und wobei die erste Durchgangsöffnung der Bipolarplatte in Fluidverbindung mit dem Hohlraum ist.

Die beiden Separatorplatten der Bipolarplatte können jeweils zusätzlich die zuvor beschriebene zweite Durchgangsöffnung aufweisen. Die zweiten Durchgangsöffnungen der beiden Separatorplatten können dann zur Ausbildung einer zweiten Durchgangsöffnung der Bipolarplatte fluchtend angeordnet sein. Typischerweise ist dann auch die zweite Durchgangsöffnung der Bipolarplatte in Fluidverbindung mit dem von den beiden Separatorplatten eingeschlossenen Hohlraum. Insbesondere wird eine der ersten und zweiten Durchgangsöffnungen als Einlass und die andere als Auslass für dasselbe Medium eingesetzt.

Die Barriereelemente der ersten Separatorplatte und die Barriereelemente der zweiten Separatorplatte können wenigstens bereichsweise überlappend angeordnet sein. Die Absenkungen der Barriereelemente der ersten Separatorplatte und die Absenkungen der Barriereelemente der zweiten Separatorplatte können dann parallel zur Planflächenebene der Bipolarplatte wenigstens teilweise versetzt angeordnet sein, bei Parallelprojektion in die Planflächenebene der Bipolarplatte also nicht zusammenfallen. Alternativ oder zusätzlich können die Absenkungen der Barriereelemente der ersten Separatorplatte und die Absenkungen der Barriereelemente der zweiten Separatorplatte auch wenigstens teilweise überlappend angeordnet sein, bei Parallelprojektion in die Planflächenebene der Bipolarplatte also zumindest abschnittsweise zusammenfallen.

Der zwischen den beiden Separatorplatten eingeschlossene Hohlraum kann einen ersten Teilraum und einen zweiten Teilraum umfassen, wobei der erste Teilraum zwischen der Rückseite des aktiven Bereichs der ersten Separatorplatte und der Rückseite des aktiven Bereichs der zweiten Separatorplatte eingeschlossen ist und wobei der zweite Teilraum zwischen der Sicke der ersten Separatorplatte und der Sicke der zweiten Separatorplatte eingeschlossen ist. Der zweite Teilraum kann somit in jeder der Separatorplatten zwei Sickenabschnitte umfassen, die auf einander gegenüberliegenden Seiten des aktiven Bereichs verlaufen. Die erste Durchgangsöffnung der Bipolarplatte und die zweite Durchgangsöffnung der Bipolarplatte können dann über eine erste Fluidverbindung verbunden sein, die den ersten Teilraum umfasst, und die erste Durchgangsöffnung der Bipolarplatte und die zweite Durchgangsöffnung der Bipolarplatte können über eine zweite Fluidverbindung verbunden sein, die den zweiten Teilraum umfasst. Die erste Fluidverbindung dient also typischerweise zum Führen oder Leiten des Hauptkühlmediumstromes, der dem erwünschten Kühlen des aktiven Bereichs dient. Die zweite Fluidverbindung führt den eigentlich unerwünschten Strom in den Sickeninnenraum, wo das Kühlmedium nicht zum Kühlen des aktiven Bereichs zur Verfügung steht. Ein minimaler Querschnitt A_{1,min} der ersten Fluidverbindung ist dann vorzugsweise größer als ein minimaler Querschnitt A_{2,min} der zweiten Fluidverbindung. Bevorzugt gilt dabei z. B.: A_{1,min} ≥ 5·A_{2,min}, bevorzugt A_{1,min} ≥ 10·A_{2,min} besonders bevorzugt A_{1,min} ≥ 15·A_{2,min}. Für eine effiziente Kühlung des elektrochemischen Systems ist hier vorteilhaft, dass der Sickeninnenraum zwar zumindest teilweise mit Kühlmedium gefüllt sein kann, dass in ihm jedoch kein nennenswerter Kühlmediumstrom stattfindet, das Kühlmedium im Sickeninnenraum also quasi stationär ist und somit das aus der ersten Durchgangsöffnung zugeführte Kühlmedium ggf. über einen Verteilbereich ausschließlich oder nahezu ausschließlich zur Rückseite des aktiven Bereichs geführt werden kann und über die Rückseite des aktiven Bereichs zur zweiten Durchgangsöffnung strömt.

Schließlich wird ein elektrochemisches System mit einer Vielzahl von Bipolarplatten der zuvor beschriebenen Art vorgeschlagen, wobei die Bipolarplatten des Systems in einem Stapel angeordnet sind. Zwischen benachbarten Bipolarplatten des Stapels ist gewöhnlich jeweils eine Membranelektrodeneinheit (MEA) angeordnet. Die MEA kann im aktiven Bereich der angrenzenden Bipolarplatten jeweils ein lonomer und vorzugsweise mindestens eine Gasdiffusionslage aufweisen. Die MEA kann auch jeweils einen verstärkten Randbereich aufweisen, der wenigstens bereichsweise mit den Barriereelementen und den Absenkungen der an die MEA angrenzenden Bipolarplatten überlappt. Es sind somit gegenüber dem Stand der Technik keine Änderung des MEA-Designs notwendig. Die Abdichtelemente der Bipolarplatten liegen auf der MEA auf, die Barriereelemente sind in einer Richtung senkrecht zu Fläche der Bipolarplatten geringfügig zu ihr beabstandet.

Die Erfindung ist durch die Ansprüche definiert. Ein Ausführungsbeispiel der Erfindung ist in den Figuren dargestellt und wird anhand der nachfolgenden Beschreibung näher erläutert. Darin sind eine Vielzahl von Merkmalen gemeinsam in Verbindung miteinander dargestellt. Es können jedoch auch einzelne der nachfolgend beschriebenen Merkmale unabhängig von den weiteren Merkmalen des Beispiels die vorliegende Erfindung weiterbilden. Im Folgenden werden weiterhin gleiche oder ähnliche Elemente mit gleichen oder ähnlichen Bezugszeichen versehen, so dass ggfs. deren Beschreibung nicht wiederholt wird. Es zeigen:
- Fig. 1: schematisch ein erfindungsgemäßes elektrochemisches System mit einer Vielzahl von gestapelten Bipolarplatten in perspektivischer Darstellung;
- Fig. 2: schematisch eine aus dem Stand der Technik bekannte Bipolarplatte in einer Draufsicht;
- Fig. 3: schematisch einen Ausschnitt des Systems 1 aus Fig. 1 in einer Schnittdarstellung;
- Fig. 4A: schematisch einen Ausschnitt einer erfindungsgemäßen Bipolarplatte in einer Draufsicht;
- Fig. 4B: ein Detail gemäß dem Ausschnitt A aus Fig. 4A;
- Fig. 4C: schematisch einen Ausschnitt einer weiteren erfindungsgemäßen Bipolarplatte in Draufsicht;
- Fig. 5A: schematisch eine erfindungsgemäße Bipolarplatte in einer Draufsicht, wobei in den Fign. 4A und 4B gezeigte Details nur der Übersichtlichkeit halber nicht dargestellt sind;
- Fig. 5B: einen Ausschnitt einer Draufsicht einer erfindungsgemäßen Bipolarplatte; sowie
- Fign. 6A-C: schematisch Ausschnitte der Bipolarplatte aus den Fign. 4A und 4B in einer Schnittdarstellung.

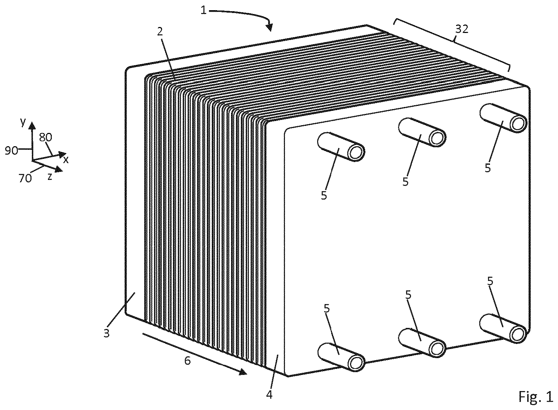

Fig. 1 zeigt ein erfindungsgemäßes elektrochemisches System 1 mit einem Stapel 32 mit einer Mehrzahl von baugleichen Bipolarplatten 2, die entlang einer z-Richtung 6 gestapelt und zwischen zwei Endplatten 3, 4 eingespannt sind. Die Bipolarplatten umfassen jeweils zwei miteinander verbundene Einzelplatten, in diesem Dokument auch Separatorplatten genannt. Im vorliegenden Beispiel handelt es sich bei dem System 1 um einen Brennstoffzellenstapel. Je zwei benachbarte Bipolarplatten des Stapels schließen also zwischen sich eine elektrochemische Zelle ein, die z. B. der Umwandlung von chemischer Energie in elektrische Energie dient. Die elektrochemischen Zellen weisen gewöhnlich jeweils eine Membranelektrodeneinheit (MEA) sowie Gasdiffusionslagen (GDL) auf. Bei alternativen Ausführungsformen kann das System 1 ebenso als Elektrolyseur, Kompressor oder als Redox-Flow-Batterie ausgebildet sein. Bei diesen elektrochemischen Systemen können ebenfalls Bipolarplatten verwendet werden. Der Aufbau dieser Bipolarplatten entspricht dem Aufbau der hier näher erläuterten Bipolarplatten, auch wenn sich die auf bzw. durch die Bipolarplatten geführten Medien unterscheiden können.

Die z-Achse 70 spannt zusammen mit einer x-Achse 80 und einer y-Achse 90 ein rechtshändiges kartesisches Koordinatensystem auf. Die Endplatte 4 weist eine Vielzahl von Medienanschlüssen 5 auf, über die dem System 1 Medien zuführbar und über die Medien aus dem System 1 abführbar sind. Diese dem System 1 zuführbaren und aus dem System 1 abführbaren Medien können z. B. Brennstoffe wie molekularen Wasserstoff oder Methanol, Reaktionsgase wie Luft oder Sauerstoff, Reaktionsprodukte wie Wasserdampf oder Kühlmittel wie Wasser und/oder Glykol umfassen.

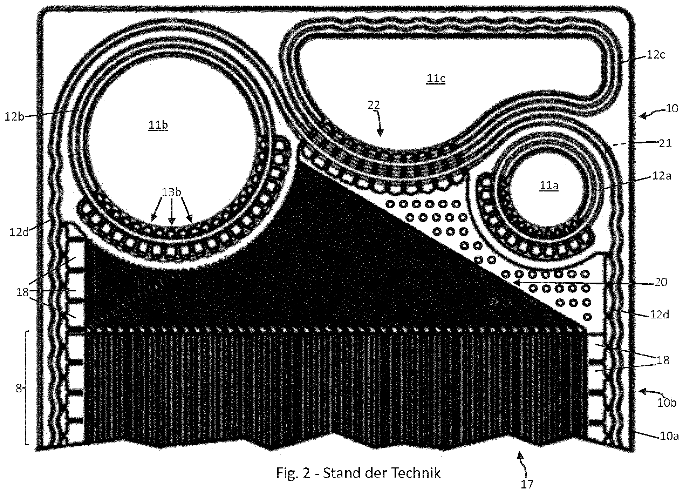

Fig. 2 zeigt einen Ausschnitt einer aus dem Stand der Technik bekannten Bipolarplatte 10, die z. B. in einem dem elektrochemischen System aus Fig. 1 verwandten System verwendbar ist. Die Bipolarplatte 10 ist aus zwei stoffschlüssig zusammengefügten Einzelplatten oder Separatorplatten 10a, 10b gebildet, von denen in Fig. 2 nur die erste Separatorplatte 10a sichtbar ist, die die zweite Separatorplatte 10b verdeckt. Die Separatorplatten 10a, 10b können jeweils aus einem Metallblech gefertigt sein, z. B. aus einem Edelstahlblech. Die Separatorplatten 10a, 10b weisen miteinander fluchtende Durchgangsöffnungen auf, die Durchgangsöffnungen 11a, 11b, 11c der Bipolarplatte 10 bilden. Bei Stapelung einer Mehrzahl von Bipolarplatten nach Art der Bipolarplatte 10 bilden die Durchgangsöffnungen 11a-c Leitungen, die sich in der Stapelrichtung 6 durch den Stapel 32 erstrecken (siehe Fig. 1). Typischerweise ist jede der durch die Durchgangsöffnungen 11a-c gebildeten Leitungen jeweils in Fluidverbindung mit einem der Medienanschlüsse 5 in der Endplatte 4 des Systems 1. Beispielsweise dienen die von den Durchgangsöffnungen 11a, 11b gebildeten Leitungen der Versorgung der elektrochemischen Zellen des Brennstoffzellenstapels mit Brennstoff und mit Reaktionsgas. Über die von der Durchgangsöffnung 11c gebildete Leitung dagegen kann Kühlmittel in den Stapel 32 eingeleitet oder aus dem Stapel 32 abgeleitet werden.

Zum Abdichten der Durchgangsöffnungen 11a-c gegenüber dem Inneren des Stapels und gegenüber der Umgebung weist die erste Separatorplatte 10a Sicken 12a, 12b, 12c auf, die jeweils um die Durchgangsöffnungen 11a-c herum angeordnet sind und die die Durchgangsöffnungen 11a-c jeweils vollständig umschließen. Die zweite Separatorplatte 10b weist an der vom Betrachter der Fig. 2 abgewandten Rückseite der Bipolarplatte 10 entsprechende Sicken zum Abdichten der Durchgangsöffnungen 11a-c auf (nicht gezeigt).

In einem elektrochemisch aktiven Bereich 8 der Bipolarplatte 10 weist die erste Separatorplatte 10a an ihrer dem Betrachter der Fig. 2 zugewandten Vorderseite ein Strömungsfeld 17 mit Strukturen zum Führen eines Mediums entlang der Vorderseite der Separatorplatte 10a auf. Diese Strukturen umfassen z. B. eine Vielzahl von Stegen und zwischen den Stegen angeordnete Kanäle. In Fig. 2 ist nur ein Ausschnitt des aktiven Bereichs 8 an der Vorderseite der Bipolarplatte 10 gezeigt. An der dem Betrachter der Fig. 2 zugewandten Vorderseite der Bipolarplatte 10 weist die erste Separatorplatte 10a zudem einen Verteil- oder Sammelbereich 20 auf, der wiederum Strukturen zum Führen eines Mediums entlang der Vorderseite der Separatorplatte 10a aufweist, wobei diese Strukturen typischerweise ebenfalls Stege und zwischen den Stegen angeordnete Kanäle umfassen.

Der Verteil- oder Sammelbereich 20 stellt eine Fluidverbindung zwischen der Durchgangsöffnung 11b und dem aktiven Bereich 8 her. So sind die Kanäle des Verteil- oder Sammelbereichs 20 über Durchführungen 13b durch die Sicke 12b in Fluidverbindung mit der Durchgangsöffnung 11b bzw. mit der von der Durchgangsöffnung 11b gebildeten Leitung durch den Stapel. So kann ein durch die Durchgangsöffnung 11b geführtes Medium über die Durchführungen 13b in der Sicke 12b und über die Kanäle des Verteil- oder Sammelbereichs 20 in die Kanäle des Strömungsfeldes 17 im aktiven Bereich 8 der Bipolarplatte 10 geführt werden.

Die Durchgangsöffnung 11a bzw. die die von der Durchgangsöffnung 11a gebildete Leitung durch den Plattenstapel ist in entsprechender Weise in Fluidverbindung mit einem Verteil- und Sammelbereich und über diesen mit einem Strömungsfeld an der vom Betrachter der Fig. 2 abgewandten Rückseite der Bipolarplatte 10. Die Durchgangsöffnung 11c dagegen bzw. die von der Durchgangsöffnung 11c gebildete Leitung durch den Stapel ist in Fluidverbindung mit einem von den Separatorplatten 10a, 10b eingeschlossenen oder umschlossenen Hohlraum 22, der zum Führen eines Kühlmittels durch die Bipolarplatte 10 ausgebildet ist.

Schließlich weist die erste Separatorplatte 10a noch eine weitere Sicke 12d auf, die das Strömungsfeld 17, den Verteil- oder Sammelbereich 20 und die Durchgangsöffnungen 11a, 11b umläuft und diese gegenüber der Durchgangsöffnung 11c, d. h. gegenüber dem Kühlmittelkreislauf, und gegenüber der Umgebung des Systems 1 abdichtet. Bei der in Fig. 2 gezeigten und aus dem Stand der Technik bekannten Bipolarplatte 10 umschließt die Sicke 12d nicht die Durchgangsöffnung 11c, die zum Führen eines Kühlmediums durch die Bipolarplatte 10 ausgebildet ist. Vielmehr verläuft die Sicke 12d abschnittweise zwischen der Durchgangsöffnung 11c und dem aktiven Bereich 8 bzw. dem Strömungsfeld 17. Dies kann gegebenenfalls dazu führen, dass Kühlmedium, das ausgehend von der Durchgangsöffnung 11c in den Hohlraum 22 zwischen den Separatorplatten 10a, 10b und insbesondere zum Kühlen des aktiven Bereichs 8 zur Rückseite des aktiven Bereichs 8 geleitet wird, in einen an der Rückseite der Separatorplatte 10a durch die Sicke 12d gebildeten Sickeninnenraum 21 gelangt. Dies kann den unerwünschten Effekt zur Folge haben, dass das in den Sickeninnenraum 21 gelangte Kühlmedium teilweise dem Verlauf der Sicke 12d folgend um das Strömungsfeld 17 des aktiven Bereichs 8 herum geleitet wird und nicht zur Kühlung des aktiven Bereichs 8 zur Verfügung steht. Gegenstand der vorliegenden Erfindung ist eine verbesserte Separatorplatte bzw. Bipolarplatte, die diesen unerwünschten Effekt und seine nachteiligen Auswirkungen ganz oder wenigstens teilweise verhindert.

Um zu verhindern, dass Medium, das von der Durchgangsöffnung 11b in das Strömungsfeld 17 des aktiven Bereichs 8 geleitet werden soll, entlang der Sicke 12d zwischen der Sicke 12d und dem Strömungsfeld 17 am Strömungsfeld 17 vorbeiströmt, weist die Separatorplatte 10a ferner eine Vielzahl von Barriereelementen 18 auf, die dem Verlauf der Sicke 12d folgend zwischen der Sicke 12d und dem Strömungsfeld 17 des aktiven Bereichs 8 in regelmäßigen Abständen angeordnet sind. Nur der Übersichtlichkeit halber sind in Fig. 2 nur einige der Barriereelemente 18 mit Bezugszeichen versehen. An der Rückseite der Separatorplatte 10 können die Barriereelemente 18 teilweise unerwünschte Fluidverbindungen zwischen der Rückseite des aktiven Bereichs 8 und dem zuvor beschriebenen Innenraum 21 der Sicke 12d bilden. Über diese Fluidverbindungen kann ggf. Kühlmedium von der Rückseite des aktiven Bereichs 8 in den Sickeninnenraum 21 gelangen, wo es nicht zur Kühlung des aktiven Bereichs 8 beitragen kann. Mit der hier vorgeschlagenen verbesserten Separatorplatte bzw. Bipolarplatte kann auch dieser unerwünschte Effekt ganz oder wenigstens teilweise unterbunden werden.

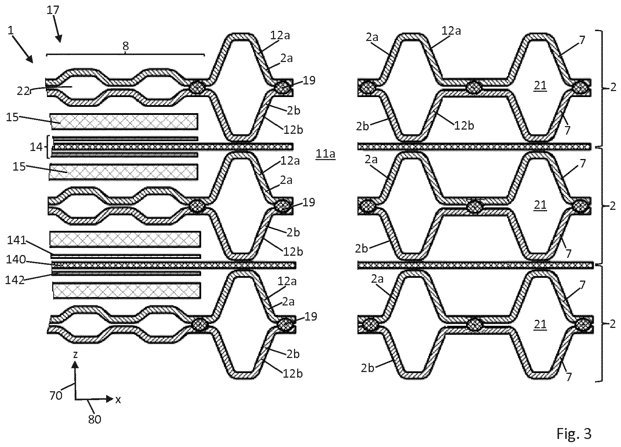

Fig. 3 zeigt schematisch Details des inneren Aufbaus des erfindungsgemäßen Systems 1 aus Fig. 1, insbesondere einen Querschnitt durch den Brennstoffzellenstapel entlang der x-z-Ebene. Hierbei ist mindestens eine Zelle (Brennstoffzelle) 14 vorgesehen, welche eine ionenleitfähige Polymermembran 140 aufweist, die zumindest in einem elektrochemisch aktiven Bereich 8 beidseitig mit einer Katalysatorschicht 141, 142 versehen ist. Außerdem sind mehrere Bipolarplatten 2 gezeigt, zwischen denen die Brennstoffzelle 14 angeordnet ist. Daneben sind Verschweißungen 19 zur Verbindung zweier metallischer Lagen, genauer zweier Separatorplatten 2a, 2b zu einer Bipolarplatte 2 gezeigt. Die Verschweißungen 19 sind z. B. mittels Laserschweißen herstellbar. Im Bereich zwischen jeder Bipolarplatte 2 und der nächstliegenden Brennstoffzelle 14 ist außerdem jeweils eine Gasdiffusionslage 15 angeordnet. Hierbei läuft jeweils eine Portsicke 12a um eine Durchgangsöffnung 11a der Bipolarplatten 2 herum. Die Portsicke 12a dient dem Abdichten der Durchgangsöffnung 11a. Die Durchgangsöffnung 11a kann z. B. zum Leiten von Wasserstoff durch das System 1 dienen. Eine im Randbereich der Bipolarplatte 2 umlaufende Sicke 7 dient dem Abdichten des elektrochemisch aktiven Bereichs 8 gegenüber einer Umgebung des Systems 1, so dass keine Medien aus dem aktiven Bereich 8 nach außen treten können oder umgekehrt.

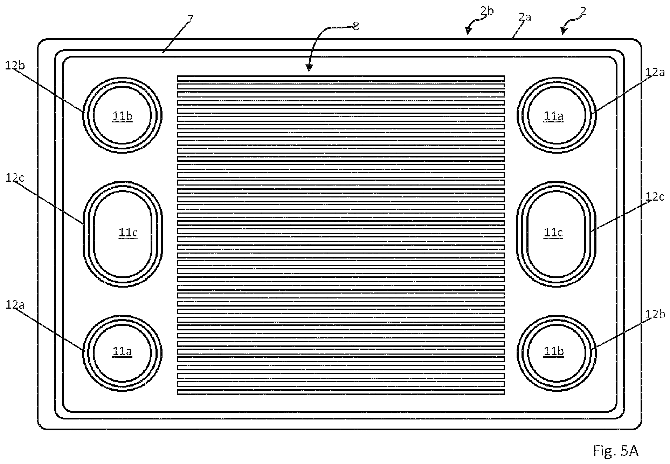

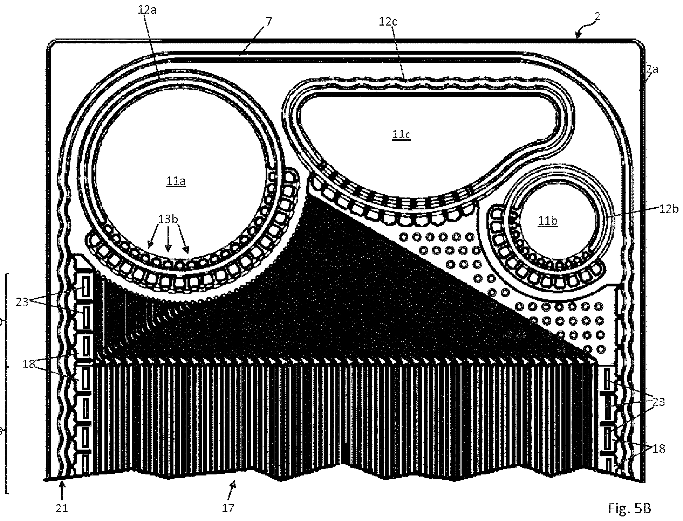

Entsprechend der in Fig. 2 gezeigten Bipolarplatte 10, weisen die erfindungsgemäßen Bipolarplatten 2 und die die Bipolarplatten 2 bildenden Separatorplatten 2a, 2b zumeist sechs, manchmal auch mehr fluchtende Durchgangsöffnungen auf (in Fig. 2 sind nur drei solcher Durchgangsöffnungen gezeigt). Dies sind üblicherweise zum einen mindestens zwei Durchgangsöffnungen zum Durchleiten von Kühlflüssigkeit durch die Bipolarplatte 2, entsprechend der Durchgangsöffnung 11c der Bipolarplatte 10 gemäß Fig. 2, wobei die entsprechenden Durchgangsöffnungen jeweils auch von einer Portsicke 12c umgeben sind (siehe Fign. 5A und 5B). Außerdem sind wie die in Fig. 3 stellvertretend gezeigten Durchgangsöffnungen 11a und 11b jeweils mindestens zwei Durchgangsöffnungen 11a und 11b zur Medienzu- und -abfuhr in den bzw. aus dem elektrochemisch aktiven Bereich 8 vorgesehen, welche jeweils von weiteren Portsicken 11a, 11b abgedichtet werden (siehe Fign. 5A und 5B). In Fig. 3 sind ferner die von den Sicken 7 gebildeten Sickeninnenräume 21 sowie die von den Separatorplatten 2a, 2b der Bipolarplatten 2 eingeschlossenen Hohlräume 22 hervorgehoben.

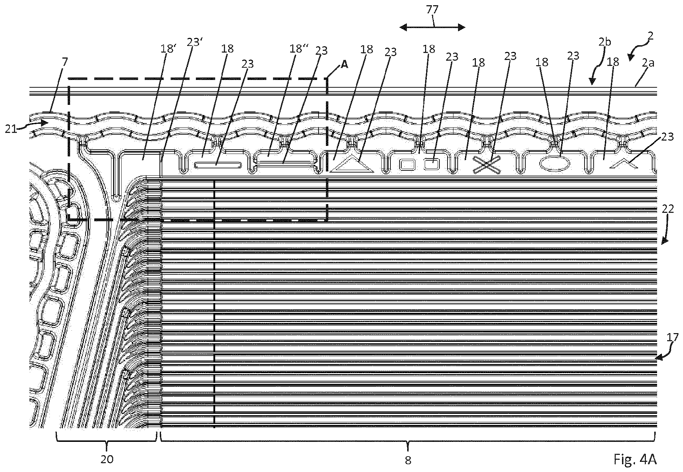

Fig. 4A zeigt eine der erfindungsgemäßen Bipolarplatten 2, die aus zwei Separatorplatten 2a, 2b zusammengefügt ist, z. B. durch Laserschweißverbindungen nach Art der Verbindungen 19 entsprechend Fig. 3. Die beiden Separatorplatten 2a, 2b können dieselben Merkmale aufweisen. Insbesondere zeigt Fig. 4A eine erste Flachseite bzw. Vorderseite der ersten Separatorplatte 2a der Bipolarplatte 2. Die zweite Separatorplatte 2b der Bipolarplatte 2 ist in Fig. 4A von der ersten Separatorplatte 2a verdeckt. Die Separatorplatten 2a, 2b sind jeweils aus einem Edelstahlblech mit einer Blechdicke von vorzugsweise höchstens 100 µm gebildet. Die Separatorplatten 2a, 2b schließen einen Hohlraum 22 zum Durchleiten eines Kühlmediums durch die Bipolarplatte 2 ein, z. B. zum Durchleiten einer Kühlflüssigkeit durch die Bipolarplatte 2. Der Hohlraum ist in Fluidverbindung mit Durchgangsöffnungen der Bipolarplatte 2, die jeweils durch fluchtende Durchgangsöffnungen der Separatorplatten 2a, 2b gebildet werden (in Fig. 4A nicht gezeigt). Diese Durchgangsöffnungen sind z. B. in Fluidverbindungen mit einem oder mehreren der Medienanschlüsse 5 aus Fig. 1.

Die Separatorplatte 2a weist an ihrer Vorderseite einen elektrochemisch aktiven Bereich 8 mit einem Strömungsfeld 17 auf, das Strukturen zum Führen eines Reaktionsmediums umfasst. Die Strukturen des Strömungsfeldes 17 umfassen hier eine Vielzahl von Stegen und zwischen den Stegen angeordnete Kanäle. Die Strukturen des Strömungsfeldes 17 sind in die Separatorplatte 2a eingeprägt und einteilig mit der Separatorplatte 2a ausgebildet. Der aktive Bereich 8 wird von einer Sicke 7 vollständig umschlossen. Die Sicke 7 hat wenigstens abschnittweise einen schlangenförmigen Verlauf, wobei die Haupterstreckungsrichtung 77 der Sicke in dem in Fig. 4A gezeigten Abschnitt der Sicke 7 dem geraden Verlauf der Außenkante der Separatorplatte 2a bzw. der Außenkante der Bipolarplatte 2 folgt. Anders als bei der in Fig. 2 gezeigten und aus dem Stand der Technik bekannten Bipolarplatte 10 umschließt die Sicke 7 jedoch nicht nur den aktiven Bereich mit dem Strömungsfeld 17, sondern zusätzlich die Durchgangsöffnung oder die Durchgangsöffnungen der Bipolarplatte 2, die in Fluidverbindung mit dem von den Separatorplatten 2a, 2b eingeschlossenen Hohlraum 22 sind (siehe Fig. 5A). So kann das unerwünschte Einströmen von Kühlmedium in den Innenraum 21 der Sicke 7 vorteilhaft unterbunden oder reduziert werden. Die Sicke 7 ist in die Separatorplatte 2a eingeprägt und einteilig mit der Separatorplatte 2a ausgebildet.

Über einen Verteil- oder Sammelbereich 20 ist das Strömungsfeld 17 des aktiven Bereichs 8 in Fluidverbindung mit einer weiteren Durchgangsöffnung der Bipolarplatte 2, die von zwei fluchtenden Durchgangsöffnungen der Separatorplatten 2a, 2b gebildet wird (in Fig. 4A nicht gezeigt). Diese Durchgangsöffnung ist wiederum in Fluidverbindung mit einem oder mehreren der Medienanschlüsse 5 aus Fig. 1. Auch der Verteil- oder Sammelbereich 20 umfasst Strukturen zum Führen des Reaktionsmediums, z. B. in Form von Stegen und zwischen den Stegen ausgebildeten Kanälen. Die Strukturen des Verteil- oder Sammelbereichs 20 sind in die Separatorplatte 2a eingeprägt und einteilig mit der Separatorplatte 2a ausgebildet. An der dem Hohlraum 22 zugewandten Rückseite der Separatorplatte 2a bilden die Strukturen des Verteil- oder Sammelbereichs 20 eine Verteilstruktur zum Verteilen von Kühlmedium über die dem Hohlraum 22 zugewandte Rückseite des aktiven Bereichs 8. Diese Verteilstruktur reicht bis an das der Sicke 7 zugewandte Ende des aktiven Bereichs 8 heran.

Zwischen der Sicke 7 und dem Strömungsfeld 17 des aktiven Bereichs 8 ist eine Vielzahl von Barriereelementen 18 angeordnet. Die Barriereelemente 18 sind jeweils in die Separatorplatte 2a eingeprägt und einteilig mit der Separatorplatte 2a ausgebildet. Die Barriereelemente 18 dienen dazu ganz oder wenigstens teilweise zu verhindern, dass Reaktionsmedium entlang der Sicke 7 zwischen der Sicke 7 und dem Strömungsfeld 17 des aktiven Bereichs 8 am aktiven Bereich 8 vorbeiströmen kann. Die Barriereelemente 18 erstrecken sich vom aktiven Bereich 18 bis zur Sicke 7. Insbesondere reichen die Barriereelemente 18 oder wenigstens einige der Barriereelemente 18 jeweils bis an die Strukturen des aktiven Bereichs 8 und bis an die Sicke 7 heran. Z. B. können die Barriereelemente 18 in die Sicke 7 und in die Strukturen des aktiven Bereichs 8 übergehen.

Die Barriereelemente 18 erstrecken sich quer zur Sicke 7 oder Haupterstreckungsrichtung 77 der Sicke 7 und quer zur Strömungsrichtung des Reaktionsmediums durch den aktiven Bereich 8 oder quer zur Verlaufsrichtung der Stege und Kanäle des aktiven Bereichs 8. Die Barriereelemente 18 oder wenigstens einige der Barriereelemente 18 sind in regelmäßigen Abständen dem Verlauf der Sicke 7 folgend in einer Reihe angeordnet. Eine maximale Höhe der Barriereelemente 18 ist typischerweise größer als eine maximale Höhe der Strukturen des aktiven Bereichs 8 und kleiner als eine maximale Höhe der Sicke 7, wobei die Höhe der Barriereelemente 18, die Höhe der Strukturen des aktiven Bereichs 8 und die Höhe der Sicke 7 jeweils entlang einer Richtung senkrecht zur Planflächenebene der Separatorplatte 2a bzw. der Bipolarplatte 2 bestimmt wird.

An einem dem aktiven Bereich 8 zugewandten Ende sind unmittelbar benachbarte Barriereelemente 18 oder wenigstens einige der unmittelbar benachbarten Barriereelemente 18 miteinander verbunden oder gehen ineinander über. Das dem aktiven Bereich 8 zugewandte Ende der Barriereelemente 18 bildet auf diese Weise einen ebenen Steg konstanter Höhe, der parallel zur Sicke 7 und parallel zu den Kanälen des aktiven Bereichs 8 verläuft. Dies kann z. B. vorteilhaft sein, wenn im Bereich der Barriereelemente 18 zwischen benachbarten Bipolarplatten 2 des Stapels aus Fig. 1 jeweils ein vorzugsweise verstärkter Randbereich einer MEA aufgenommen und verpresst ist.

Ein unerwünschter Nebeneffekt der zuvor beschriebenen Ausgestaltung der Barriereelemente 18 kann darin bestehen, dass die Barriereelemente 18 oder einige von ihnen an der dem Hohlraum 22 zugewandten Rückseite der Separatorplatte 2a eine Fluidverbindung zwischen der Rückseite des aktiven Bereichs 8 und dem Innenraum 21 der Sicke 7 bilden. Über diese Fluidverbindung kann gegebenenfalls Kühlmedium von der Rückseite des aktiven Bereichs 8 in den Sickeninnenraum 21 gelangen, wo das Kühlmedium nicht oder nur in ungenügendem Maße der Kühlung des aktiven Bereichs 8 dienen kann.

Um diesen unerwünschten Abfluss von Kühlmedium von der Rückseite des aktiven Bereichs 8 in den Sickeninnenraum 21 zu unterbinden oder wenigstens teilweise zu reduzieren, weisen die Barriereelemente 18 oder wenigstens einige von ihnen Absenkungen 23 auf. Wie die Barriereelemente 18 sind die Absenkungen 23 in die Separatorplatte 2a eingeprägt und einteilig mit der Separatorplatte 2a ausgebildet. Durch das wenigstens bereichsweise Absenken der Barriereelemente 18 kann der Querschnitt der von den Barriereelementen 18 an der dem Hohlraum 22 zugewandten Rückseite der Separatorplatte 2a gebildeten Fluidverbindungen verringert werden, so dass der Abfluss von Kühlmedium von der Rückseite des aktiven Bereichs 8 in den Innenraum 21 der Sicke 7 durch die Absenkungen 23 ganz oder wenigstens teilweise unterbunden wird. Dazu sind die Absenkungen 23 oder wenigstens einige von ihnen vorzugsweise derart ausgebildet, dass sie einen senkrecht zur Planflächenebene der Separatorplatte 2a bestimmten Querschnitt der durch das jeweilige Barriereelement 18 gebildeten Fluidverbindung zwischen der Rückseite des aktiven Bereichs 8 und dem Innenraum 21 der Sicke 7 an der Rückseite der Separatorplatte 2a wenigstens um 50 Prozent, vorzugsweise wenigstens um 70 Prozent, besonders vorzugsweise wenigstens um 90 Prozent reduzieren. Die Reduktion kann dabei sowohl in Richtung parallel zur Haupterstreckungsrichtung 77 der Sicke als auch senkrecht zu dieser variieren.

Wie der Darstellung der Fig. 4A entnehmbar ist, können die Absenkungen 23 der Barriereelemente 18 unterschiedlich ausgestaltet sein. Beispielsweise können die Absenkungen 23 eine längliche Form, eine rechteckige Form, eine ovale Form, die Form eines Kreuzes, eine V-Form oder eine Dreiecksform aufweisen. Natürlich sind auch noch andere als die hier dargestellten Formen denkbar. Die Absenkungen 23 oder einige von ihnen können parallel zur Sicke 7 oder zur Haupterstreckungsrichtung der Sicke 7 oder parallel zum Verlauf der Kanäle des aktiven Bereichs 8 ausgerichtet sein, d.h. ihre größte Erstreckung aufweisen.

In Fig. 4A sind die meisten der Absenkungen 23 von den Rändern der Barriereelemente 18 beabstandet, insbesondere von der Sicke 7 und vom aktiven Bereich 8. In diesem Fall behalten die Barriereelemente 18 wenigstens im Randbereich ihre volle Höhe oder nahezu ihre volle Höhe, so dass sie das Vorbeiströmen von Reaktionsmedium am aktiven Bereich 8 trotz der Absenkung 23 verhindern. Es ist jedoch auch denkbar, dass sich die Absenkungen 23 oder einige von ihnen über die gesamte Breite oder Länge des jeweiligen Barriereelements 23 erstreckt oder erstrecken. So kann der Kühlmittelfluss in den Sickeninnenraum 21 besonders effizient unterbunden oder reduziert werden.

Beispielsweise weist ein mit 18' gekennzeichnetes Barriereelement, das nicht bis an die Sicke 7 heranreicht, eine Absenkung 23' auf, die sich quer zur Sicke 7 und quer zur Verlaufsrichtung der Kanäle des aktiven Bereichs 8 über die ganze Ausdehnung dieses Barriereelements 18' erstreckt. somit ist die Separatorplatte 2a im Bereich der Absenkung 23' vom aktiven Bereich 8 bis zur Sicke 7 durchgehend abgesenkt. Das Barriereelement 18' und die Absenkung 23' sind an einem Ende der Reihe von Barriereelementen 18 angeordnet, das der Verteilstruktur an der Rückseite des Verteil- oder Sammelbereichs 20 zugewandt ist. Mittels der Absenkung 23' kann ganz oder wenigstens teilweise verhindert werden, dass Kühlmedium ausgehend von der Verteilstruktur an der Rückseite des Verteil- oder Sammelbereichs 20 in die von den Barriereelementen 18 an der Rückseite der Separatorplatte 2a gebildeten Kanäle oder Fluidverbindungen einströmt. Die zweite Separatorplatte 2b kann an derselben Stelle eine entsprechenden Absenkung 23' aufweisen, so dass die Absenkung 23' der ersten Separatorplatte 2a und die entsprechende Absenkung 23' der zweiten Separatorplatte 2b einander berühren und das Einströmen von Kühlmedium in den Bereich zwischen der Sicke 7 und dem aktiven Bereich 8 möglichst vollständig unterbinden.

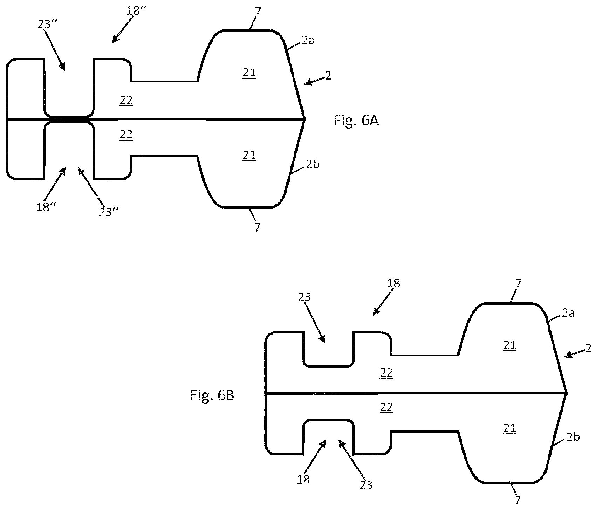

Ferner weist ein mit 18" gekennzeichnetes Barriereelement eine Absenkung 23" auf, die sich parallel zur Sicke 7 und parallel zu den Kanälen des aktiven Bereichs 8 über die gesamte Breite des Barriereelements 18" erstreckt. Auch in diesem Fall kann die zweite Separatorplatte 2b an derselben Stelle eine entsprechenden Absenkung 23" aufweisen, so dass die Absenkung 23" der ersten Separatorplatte 2a und die entsprechende Absenkung 23" der zweiten Separatorplatte 2b einander berühren und das Einströmen von Kühlmedium in den Sickeninnenraum 21 an dieser Stelle möglichst vollständig unterbinden (siehe Fig. 6A).

Vorzugsweise weist die Separatorplatte 2a Barriereelemente 18 mit beiden Arten von Absenkungen 23 auf, also sowohl solche Absenkungen, die sich über die gesamte Breite des jeweiligen Barriereelements 18 erstrecken, als auch solche, die von den Rändern des jeweiligen Barriereelements 18 beabstandet sind.

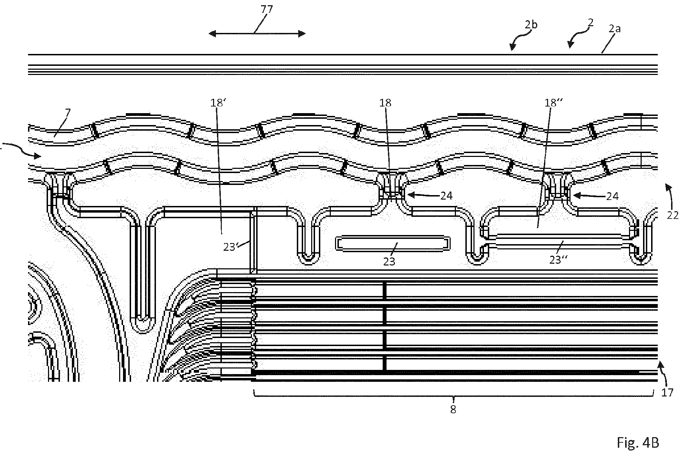

Fig. 4B zeigt ein Detail der in Fig. 4A dargestellten Separatorplatte 2a bzw. Bipolarplatte 2 gemäß dem Ausschnitt A. Insbesondere ist in Fig. 4B zu sehen, dass sich die Barriereelemente 18, 18", die jeweils bis an das Strömungsfeld des aktiven Bereichs 8 und bis an die Sicke 7 heranreichen, ausgehend vom aktiven Bereich 8 in Bereichen 24 zur Sicke 7 hin im Wesentlichen stufenartig verjüngen. In den Verjüngungsbereichen 24 sind die Barriereelemente 18, 18" vorzugsweise jeweils nicht abgesenkt. In Fig. 4A und 4B verjüngt sich der senkrecht zur Planflächenebene der Separatorplatte 2a und parallel zur Verlaufsrichtung der Sicke 7 bestimmte Querschnitt der von den Barriereelementen 18, 18" an der Rückseite der Separatorplatte 2a gebildeten Fluidverbindungen in den Bereichen 24 jeweils um ca. 80 Prozent. Bei alternativen Ausführungsformen kann sich dieser Querschnitt in den Bereichen 24 auch jeweils um wenigstens 50 Prozent oder um wenigstens 90 Prozent verjüngen. Die Querschnittsverjüngungen in den Bereichen 24 können ebenfalls dazu beitragen, das ungewollte Einströmen von Kühlmedium in den Sickeninnenraum 21 an der Rückseite der Separatorplatte 2a zu reduzieren.

Der zwischen den beiden Separatorplatten 2a, 2b eingeschlossene Hohlraum 22 kann einen ersten Teilraum und einen zweiten Teilraum umfassen, wobei der erste Teilraum zwischen dem aktiven Bereich 8 der ersten Separatorplatte 2a und dem aktiven Bereich der zweiten Separatorplatte 2b eingeschlossen ist und wobei der zweite Teilraum zwischen der Sicke 7 der ersten Separatorplatte 2a und einer entsprechenden Sicke der zweiten Separatorplatte 2b eingeschlossen ist. Die Durchgangsöffnungen 11c zur Kühlmittelversorgung können jeweils über eine erste und eine zweite Fluidverbindung verbunden sein, wobei die erste Fluidverbindung den ersten Teilraum umfasst und wobei die zweite Fluidverbindung den zweiten Teilraum umfasst. Vorzugsweise ist dabei ein minimaler Querschnitt A_{1,min} der ersten Fluidverbindung größer als ein minimaler Querschnitt A_{2,min} der zweiten Fluidverbindung. Insbesondere kann z. B. gelten: A_{1,min} ≥ 10·A_{2,min}, besonders vorzugsweise A_{1,min} ≥ 25·A_{2,min}.

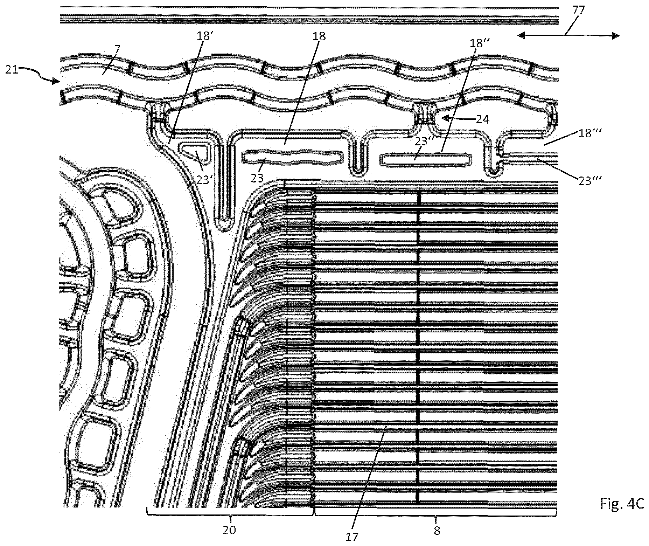

Fig. 4C zeigt eine Draufsicht auf einen Ausschnitt einer anderen erfindungsgemäßen Bipolarplatte 2 bzw. einer anderen erfindungsgemäßen Separatorplatte 2a, die grundsätzlich ähnlich wie die in Fig. 4A bzw. 4B aufgebaut ist. Die Separatorplatte 2a weist an ihrer Vorderseite einerseits einen elektrochemisch aktiven Bereich 8 mit einem Strömungsfeld 17 auf, das Strukturen zum Führen eines Reaktionsmediums umfasst. Links davon ist ein Abschnitt eines Verteilbereiches 20 gezeigt, in dem Reaktionsmedium auf der gezeigten ersten Flachseite der Separatorplatte 2a von einer nicht gezeigten Durchgangsöffnung zum Strömungsfeld 17 bzw. umgekehrt geführt wird. Auf der Rückseite des Verteilbereiches 20 wird hingegen Kühlmedium von einer ebenfalls nicht gezeigten Durchgangsöffnung zur Rückseite des Strömungsfelds 17 bzw. umgekehrt geführt. Hier sind Barriereelemente 18", 18'" zwischen der Sicke 7 und dem aktiven Bereich 8 angeordnet, die Barriereelemente 18 und 18' sind zwischen dem Verteilbereich 20 und der Sicke 7 angeordnet. Im Bereich all dieser Barriereelemente 18, 18', 18", 18'" sind Absenkungen 23, 23', 23", 23'" vorgesehen, die einen Fluss von Kühlmedium von der Rückseite des aktiven Bereichs 8 oder vom Verteilbereich 20 zum Innenraum 21 der Sicke 7 verhindern oder zumindest stark begrenzen. Insbesondere anhand der Absenkung 23' wird deutlich, dass diese in ihrer Form an die des zugehörigen Barriereelements 18' angepasst ist.

Fig. 5A zeigt nur schematisch eine vollständige Draufsicht auf die Bipolarplatte 2 mit den Separatorplatten 2a, 2b. Dargestellt sind ferner die Strukturen des aktiven Bereichs 8, die Durchgangsöffnungen 11a-c, wobei mit demselben Bezugszeichen bezeichnete Durchgangsöffnungen miteinander in Fluidverbindung sein sollen, sowie die Sicke 7. Anders als die Sicke 12d der bekannten Bipolarplatte 10 gemäß Fig. 2 umläuft die Sicke 7 der erfindungsgemäßen Bipolarplatte 2 den aktiven Bereich 7, die Durchgangsöffnungen 11a-b zum Durchleiten von Brennstoff und Reaktionsmedium durch die Bipolarplatte 2 und zusätzlich die Durchgangsöffnungen 11c zum Durchleiten von Kühlmedium durch die Bipolarplatte 2. Ferner ist in Fig. 5A zu erkennen, dass die erfindungsgemäße Bipolarplatte 2 wie bereits die Bipolarplatte 10 gemäß Fig. 2 zusätzliche Portsicken 12a-c aufweist, die jeweils nur genau eine der Durchgangsöffnungen 11a-c umschließen und jeweils zum Abdichten genau einer der Durchgangsöffnungen 11a-c ausgebildet sind. Nur der Übersichtlichkeit halber sind weitere, bereits in den Fign. 4A und 4B gezeigte Details der Separatorplatte 2a bzw. der Bipolarplatte 2, wie beispielsweise die Barriereelemente 18 und die Absenkungen 23, in Fig. 5A nicht erneut abgebildet.

Funktionsgleiche Strukturen werden hingegen in Fig. 5B gezeigt, die einen Ausschnitt einer Draufsicht einer erfindungsgemäßen Bipolarplatte zeigt und zwar in einem Ausschnitt, der dem der Fig. 2 entspricht. Hier ist in jedem Barriereelement 18 eine rechteckige Absenkung 23 vorhanden, das einen Fluss von Kühlmedium von der Rückseite des aktiven Bereichs 8 zum Innenraum 21 der Sicke 7 verhindern oder zumindest stark begrenzen. Im gezeigten Ausschnitt sind im Bereich links vom Verteilbereich 20 weitere Barriereelemente 18 mit jeweils einer Absenkung 23 gezeigt. Hierdurch wird bereits ein Fluss von Kühlmittel von der Rückseite des Verteilbereichs 20 zum Innenraum 21 der Sicke 7 verhindert.

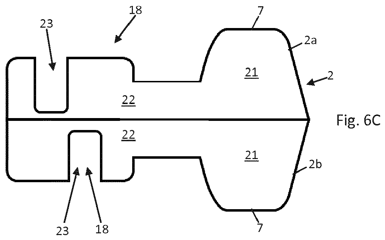

Fign. 6A-C zeigen verschiedene Ausschnitte einer erfindungsgemäßen Bipolarplatte 2, und zwar jeweils im Bereich eines der in den Fign. 4A und 4B dargestellten Barriereelemente 18, 18" mit eingeprägten Absenkungen 23, 23", die insbesondere dazu dienen, das Einströmen von Kühlmedium von der Rückseite des aktiven Bereichs in den Innenraum 21 der Sicke 7 zu unterbinden oder zu reduzieren. Die Schnittebenen der Fign. 6A-C stehen jeweils senkrecht auf der Planflächenebene der Bipolarplatte 2 bzw. der Separatorplatten 2a, 2b. Fig. 6A zeigt, dass die Absenkungen 23" der Barriereelemente 18" einander berühren und das Einströmen von Kühlmedium in den Sickeninnenraum 21 im Bereich der Barriereelemente 18" vollständig verhindern. Ferner ist den Fign. 6A-C entnehmbar, dass die Barriereelemente 18, 18" teilweise überlappend angeordnet sind und dass zudem die Absenkungen 23, 23" der beiden Separatorplatten 2a, 2b senkrecht zur Planflächenebene der Bipolarplatte sowohl überlappend (Fign. 6A, 6B) als auch ganz oder wenigstens teilweise versetzt (Fig. 6C) angeordnet sein können.

## Patentansprüche

1. Separatorplatte (2a, 2b) für ein elektrochemisches System (1), insbesondere für eine Bipolarplatte (2) eines elektrochemischen Systems (1), umfassend:
eine erste Durchgangsöffnung (11c) zum Durchleiten eines Kühlmediums durch die Separatorplatte (2a, 2b);
einen aktiven Bereich (8) mit Strukturen zum Führen eines Reaktionsmediums entlang einer ersten Flachseite der Separatorplatte (2a, 2b) und Strukturen zum Führen eines Kühlmediums entlang einer Rückseite des aktiven Bereichs (8) an der zweiten Flachseite der Separatorplatte (2a, 2b);
eine einteilig mit der Separatorplatte (2a, 2b) ausgebildete Sicke (7) zum Abdichten zumindest des aktiven Bereichs (8); und
einteilig mit der Separatorplatte (2a, 2b) ausgebildete Barriereelemente (18, 18', 18");
wobei die Barriereelemente (18, 18', 18")
a. zwischen dem aktiven Bereich (8) und der Sicke (7) angeordnet sind
und/oder
b. zwischen einem Verteilbereich (20) der Separatorplatte (2a, 2b) und der Sicke (7) angeordnet sind, wobei der Verteilbereich (20) zum Führen des Kühlmittels von der Durchgangsöffnung (11c) zur Rückseite des aktiven Bereichs (8) oder von der Rückseite des aktiven Bereichs (8) zur Durchgangsöffnung (11c) an der zweiten Flachseite der Separatorplatte (2a, 2b) ausgebildet ist; und
wobei die Barriereelemente (18, 18', 18") derart ausgebildet sind, dass sie einen Fluss von Reaktionsmedium an der ersten Flachseite der Separatorplatte (2a, 2b) entlang der Sicke (7) und vorbei am aktiven Bereich (8) reduzieren oder unterbinden;
**dadurch gekennzeichnet,**
**dass** die Sicke (7) die erste Durchgangsöffnung (11c) und den aktiven Bereich (8) gemeinsam vollständig umschließt und dass mindestens eines der Barriereelemente (18, 18', 18") wenigstens bereichsweise abgesenkt ist, insbesondere zum Reduzieren oder zum Unterbinden eines Kühlmediumflusses an der zweiten Flachseite der Separatorplatte (2a, 2b) im Bereich dieses Barriereelements zwischen der Rückseite des aktiven Bereichs (8) und einem Innenraum (21) der Sicke (7) und/oder zwischen einer Rückseite des Verteilbereichs und dem Innenraum (21) der Sicke (7),
wobei die Absenkung (23, 23', 23") wenigstens bei einem oder bei mehreren der Barriereelemente (18, 18', 18") derart ausgebildet ist, dass sie einen senkrecht zur Planflächenebene der Separatorplatte (2a, 2b) bestimmten Querschnitt einer durch das Barriereelement gebildeten Verbindung zwischen der Rückseite des aktiven Bereichs (8) und dem Innenraum (21) der Sicke (7) an der zweiten Flachseite der Separatorplatte (2a, 2b) wenigstens um 50 Prozent reduziert.

2. Separatorplatte (2a, 2b) nach Anspruch 1 mit einer zweiten Durchgangsöffnung zum Durchleiten eines Kühlmediums durch die Separatorplatte (2a, 2b), wobei die Sicke (7) auch die zweite Durchgangsöffnung vollständig umschließt.

3. Separatorplatte (2a, 2b) nach Anspruch 2, wobei die erste Durchgangsöffnung (11c) und die zweite Durchgangsöffnung an einander gegenüber liegenden Seiten des aktiven Bereichs (8) angeordnet sind.

4. Separatorplatte (2a, 2b) nach einem der vorhergehenden Ansprüche,
wobei sich die Absenkung (23, 23', 23") wenigstens bei einem oder bei mehreren der Barriereelemente (18, 18', 18") zumindest in einer Richtung über das gesamte Barriereelement erstreckt und/oder
wobei die Absenkung (23, 23', 23") wenigstens bei einem oder bei mehreren der Barriereelemente (18, 18', 18") von den Rändern des Barriereelements beabstandet ist und/oder
wobei die Absenkung (23, 23', 23") wenigstens bei einem oder bei mehreren der Barriereelemente (18, 18', 18") eine längliche Form hat und parallel oder im Wesentlichen parallel zur Haupterstreckungsrichtung der Sicke (7) ausgerichtet ist und/oder
wobei die Absenkung (23, 23', 23") wenigstens bei einem oder bei mehreren der Barriereelemente (18, 18', 18") derart ausgebildet ist, dass sie den senkrecht zur Planflächenebene der Separatorplatte (2a, 2b) bestimmten Querschnitt der durch das Barriereelement gebildeten Verbindung zwischen der Rückseite des aktiven Bereichs (8) und dem Innenraum (21) der Sicke (7) an der zweiten Flachseite der Separatorplatte (2a, 2b) wenigstens um 70 Prozent, vorzugsweise wenigstens um 90 Prozent reduziert und/oder
wobei wenigstens eines oder mehrere der Barriereelemente (18, 18', 18") bis an den aktiven Bereich (8) und bis an die Sicke (7) heran reicht oder heran reichen und/oder
wobei wenigstens eines oder mehrere der Barriereelemente (18, 18', 18") wenigstens abschnittweise quer zur Haupterstreckungsrichtung der Sicke (7) ausgerichtet ist oder ausgerichtet sind.

5. Separatorplatte (2a, 2b) nach einem der vorhergehenden Ansprüche,
wobei wenigstens einige der einander benachbarten Barriereelemente (18, 18', 18") miteinander verbunden sind, vorzugsweise jeweils durch eine parallel zur Haupterstreckungsrichtung der Sicke (7) ausgerichtete Verbindung und/oder wobei wenigstens eines oder mehrere der Barriereelemente (18, 18', 18") derart ausgebildet ist oder ausgebildet sind, dass sich ein senkrecht zur Planflächenebene der Separatorplatte (2a, 2b) bestimmter Querschnitt des jeweiligen Barriereelements zur Sicke (7) hin verjüngt, und zwar vorzugsweise wenigstens um 50 Prozent, besonders vorzugsweise wenigstens um 70 Prozent und/oder
wobei sich der Querschnitt vorzugsweise entlang einer Richtung parallel zur Planflächenebene der Separatorplatte (2a, 2b) verjüngt (24), vorzugsweise parallel zur Haupterstreckungsrichtung der Sicke (7).

6. Separatorplatte (2a, 2b) nach dem vorhergehenden Anspruch, wobei die Verjüngung (24) wenigstens bei einem oder bei mehreren der Barriereelemente (18, 18', 18") stufenartig erfolgt.

7. Separatorplatte (2a, 2b) nach einem der vorhergehenden Ansprüche mit einer Verteilstruktur zum Verteilen von Kühlmedium über die Rückseite des aktiven Bereichs (8), wobei die Verteilstruktur quer zur Strömungsrichtung des Kühlmittels entlang der Rückseite des aktiven Bereichs (8) bis an ein der Sicke (7) zugewandtes Ende des aktiven Bereichs (8) heranreicht und/oder mit wenigstens einer Absenkung (23, 23', 23"), die sich quer zur Strömungsrichtung des Kühlmediums entlang der Rückseite des aktiven Bereichs (8) durchgehend vom aktiven Bereich (8) bis zur Sicke (7) erstreckt.

8. Separatorplatte (2a, 2b) nach dem vorhergehenden Anspruch, wobei die Barriereelemente (18, 18', 18") parallel zur Haupterstreckungsrichtung der Sicke (7) in einer Reihe angeordnet sind und wobei die Absenkung (23, 23', 23"), die sich durchgehend vom aktiven Bereich (8) zur Sicke (7) erstreckt, an einem der Verteilstruktur zugewandten Ende dieser Reihe angeordnet ist.

9. Separatorplatte (2a, 2b) nach einem der vorhergehenden Ansprüche, mit wenigstens einem Barriereelement der zuvor genannten Art ohne Absenkung (23, 23', 23").

10. Separatorplatte (2a, 2b) nach einem der vorhergehenden Ansprüche mit einer ersten Portsicke (12c), die die erste Durchgangsöffnung (11c) vollständig umschließt.

11. Separatorplatte (2a, 2b) nach einem der vorhergehenden Ansprüche, die aus einem Metallblech gebildet ist, vorzugsweise aus einem Edelstahlblech, wobei wenigstens eines, mehrere oder alle der folgenden Elemente in die Separatorplatte (2a, 2b) eingeprägt ist bzw. eingeprägt sind:
die Sicke (7) oder die Sicken (7);
die Strukturen des aktiven Bereichs (8);
Verteilstrukturen des Verteilbereichs (20);
die Barriereelemente (18, 18', 18"); und/oder
die Absenkungen (23, 23', 23").

12. Bipolarplatte (2) für ein elektrochemisches System (1) mit einer ersten Separatorplatte (2a, 2b) nach einem der vorhergehenden Ansprüche und mit einer zweiten Separatorplatte (2a, 2b) nach einem der vorhergehenden Ansprüche, wobei die beiden Separatorplatten (2a, 2b) miteinander verbunden sind, wobei die ersten Durchgangsöffnungen (11c) der beiden Separatorplatten (2a, 2b) zur Ausbildung einer ersten Durchgangsöffnung (11c) der Bipolarplatte (2) fluchtend angeordnet sind, wobei die beiden Separatorplatten (2a, 2b) einen Hohlraum (22) zum Durchführen eines Kühlmediums durch die Bipolarplatte (2) einschließen und wobei die erste Durchgangsöffnung (11c) der Bipolarplatte (2) in Fluidverbindung mit dem Hohlraum (22) ist.

13. Bipolarplatte (2) nach Anspruch 12 mit zwei Separatorplatten (2a, 2b) nach einem der Ansprüche 2 oder 3 oder nach einem der Ansprüche 4 bis 11,
soweit rückbezogen auf Anspruch 2, wobei die zweiten Durchgangsöffnungen der beiden Separatorplatten (2a, 2b) zur Ausbildung einer zweiten Durchgangsöffnung der Bipolarplatte (2) fluchtend angeordnet sind und wobei die zweite Durchgangsöffnung der Bipolarplatte (2) in Fluidverbindung mit dem Hohlraum (22) ist und/oder
wobei die Barriereelemente (18, 18', 18") der ersten Separatorplatte (2a, 2b) und die Barriereelemente (18, 18', 18") der zweiten Separatorplatte (2a, 2b) wenigstens bereichsweise überlappend angeordnet sind und wobei die Absenkungen (23, 23', 23") der Barriereelemente (18, 18', 18") der ersten Separatorplatte (2a, 2b) und die Absenkungen (23, 23', 23") der Barriereelemente (18, 18', 18") der zweiten Separatorplatte (2a, 2b) parallel zur Planflächenebene der Bipolarplatte (2) wenigstens teilweise versetzt angeordnet sind und/oder
wobei die Barriereelemente (18, 18', 18") der ersten Separatorplatte (2a, 2b) und die Barriereelemente (18, 18', 18") der zweiten Separatorplatte (2a, 2b) wenigstens bereichsweise überlappend angeordnet sind und wobei die Absenkungen (23, 23', 23") der Barriereelemente (18, 18', 18") der ersten Separatorplatte (2a, 2b) und die Absenkungen (23, 23', 23") der Barriereelemente (18, 18', 18") der zweiten Separatorplatte (2a, 2b) wenigstens teilweise überlappend angeordnet sind.

14. Bipolarplatte (2) nach Anspruch 13, wobei der zwischen den beiden Separatorplatten (2a, 2b) eingeschlossene Hohlraum (22) einen ersten Teilraum und einen zweiten Teilraum umfasst, wobei der erste Teilraum zwischen dem aktiven Bereich (8) der ersten Separatorplatte (2a, 2b) und dem aktiven Bereich (8) der zweiten Separatorplatte (2a, 2b) eingeschlossen ist, wobei der zweite Teilraum zwischen der Sicke (7) der ersten Separatorplatte (2a, 2b) und der Sicke (7) der zweiten Separatorplatte (2a, 2b) eingeschlossen ist, wobei die erste Durchgangsöffnung (11c) der Bipolarplatte (2) und die zweite Durchgangsöffnung der Bipolarplatte (2) über eine erste Fluidverbindung verbunden sind, die den ersten Teilraum umfasst, und wobei die erste Durchgangsöffnung (11c) der Bipolarplatte (2) und die zweite Durchgangsöffnung der Bipolarplatte (2) über eine zweite Fluidverbindung verbunden sind, die den zweiten Teilraum umfasst, wobei ein minimaler Querschnitt A_{1,min} der ersten Fluidverbindung größer ist als ein minimaler Querschnitt A_{2,min} der zweiten Fluidverbindung, wobei vorzugsweise gilt: A_{1,min} ≥ 10·A_{2,min}, besonders vorzugsweise A_{1,min} ≥ 25·A_{2,min}.

15. Elektrochemisches System (1) mit einer Vielzahl von Bipolarplatten (2) nach einem der Ansprüche 12 bis 14, die in einem Stapel angeordnet sind, wobei zwischen benachbarten Bipolarplatten (2) des Stapels jeweils eine Membranelektrodeneinheit (MEA) angeordnet ist, wobei die MEA im aktiven Bereich (8) der angrenzenden Bipolarplatten (2) jeweils ein lonomer (140) und vorzugsweise mindestens eine Gasdiffusionslage (15) aufweist, wobei die MEA vorzugsweise jeweils einen verstärkten Randbereich aufweist, der wenigstens bereichsweise mit den Barriereelementen (18, 18', 18") der an die MEA angrenzenden Bipolarplatten (2) überlappt.

## Claims

1. A separator plate (2a, 2b) for an electrochemical system (1), in particular for a bipolar plate (2) of an electrochemical system (1), comprising:
a first through-opening (11c) for leading a coolant through the separator plate (2a, 2b);
an active region (8) with structures for leading a reaction medium along a first flat side of the separator plate (2a, 2b) and structures for leading a coolant along a rear side of the active region (8) on the second flat side of the separator plate (2a, 2b);
a bead (7) which is formed as one part with the separator plate (2a, 2b), for sealing at least the active region (8); and
barrier elements (18, 18', 18") which are formed as one part with the separator plate (2a, 2b);
wherein the barrier elements (18, 18', 18")
a. are arranged between the active region (8) and the bead (7),
and/or
b. are arranged between a distributing region (20) of the separator plate (2a, 2b) and the bead (7), wherein the distributing region (20) is configured for leading the coolant from the through-opening (11c) to the rear side of the active region (8) or from the rear side of the active region (8) to the through-opening (11c) on the second flat side of the separator plate (2a, 2b); and
wherein the barrier elements (18, 18', 18") are formed in a manner such that they reduce or prevent a flow of reaction medium on the first flat side of the separator plate (2a, 2b) along the bead (7) and past the active region (8);
**characterized in that**
the bead (7) completely encompasses both the first through-opening (11c) and the active region (8) and that at least one of the barrier elements (18, 18', 18") is recessed at least in regions, in particular for reducing or for preventing a coolant flow on the second flat side of the separator plate (2a, 2b) in the region of this barrier element between the rear side of the active region (8) and an interior (21) of the bead (7) and/or between a rear side of the distributing region and the interior (21) of the bead (7), wherein at least with regard to one or more of the barrier elements (18, 18', 18"), the recess (23, 23', 23") is designed in a manner such that it reduces by at least by 50 percent a cross section, defined perpendicularly to the planar surface plane of the separator plate (2a, 2b), of a connection between the rear side of the active region (8) and the interior (21) of the bead (7) on the second flat side of the separator plate (2a, 2b), said connection being formed by the barrier element.

2. A separator plate (2a, 2b) according to claim 1, with a second through-opening for leading a coolant through the separator plate (2a, 2b), wherein the bead (7) also completely encompasses the second through-opening.

3. A separator plate (2a, 2b) according to claim 2, wherein the first through-opening (11c) and the second through-opening are arranged on sides of the active region (8) which lie opposite one another.

4. A separator plate (2a, 2b) according to one of the preceding claims, wherein at least with regard to one or more of the barrier elements (18, 18', 18"), the recess (23, 23', 23") extends over the complete barrier element at least in one direction, and/or
wherein at least with regard to one or more of the barrier elements (18, 18', 18"), the recess (23, 23', 23") is distanced to the edges of the barrier element, and/or
wherein at least with regard to one or more of the barrier elements (18, 18', 18"), the recess (23, 23', 23") has an elongate shape and is aligned parallel or essentially parallel to the main extension direction of the bead (7), and/or
wherein at least with regard to one or more of the barrier elements (18, 18', 18"), the recess (23, 23', 23") is designed in a manner such that it reduces by at least by at least 70 percent, preferably by at least 90 percent, the cross section, defined perpendicularly to the planar surface plane of the separator plate (2a, 2b), of the connection between the rear side of the active region (8) and the interior (21) of the bead (7) on the second flat side of the separator plate (2a, 2b), said connection being formed by the barrier element, and/or
wherein at least one or more of the barrier elements (18, 18', 18") reaches or reach up to the active region (8) and up to the bead (7), and/or
wherein at least one or more of the barrier elements (18, 18', 18") at least in sections is or are aligned transversely to the main extension direction of the bead (7).

5. A separator plate (2a, 2b) according to one of the preceding claims, wherein at least some of the barrier elements (18, 18', 18") which are adjacent to one another are connected to one another, preferably by way of a connection which is aligned parallel to the main extension direction of the bead (7), and/or wherein at least one or more of the barrier elements (18, 18', 18") is or are formed in a manner such that a cross section of the respective barrier element which is defined perpendicularly to the planar surface plane of the separator plate (2a, 2b) tapers towards the bead (7), and specifically preferably by at least 50 percent, particularly preferably at least 70 percent, and/or
wherein the cross section preferably tapers (24) along a direction parallel to the planar surface plane of the separator plate (2a, 2b), preferably parallel to the main extension direction of the bead (7).

6. A separator plate (2a, 2b) according to the preceding claim, wherein the tapering (24) is effected in a step-like manner at least with regard to one or several of the barrier elements (18, 18', 18").

7. A separator plate (2a, 2b) according to one of the preceding claims, with a distributing structure for distributing coolant over the rear side of the active region (8), wherein the distributing structure transversely to the flow direction of the coolant along the rear side of the active region (8) reaches up to an end of the active region (8) which faces the bead (7), and/or with at least one recess (23, 23', 23") which extends transversely to the flow direction of the coolant along the rear side of the active region (8) in a continuous manner from the active region (8) up to the bead (7).

8. A separator plate (2a, 2b) according to the preceding claim, wherein the barrier elements (18, 18', 18") are arranged in a row parallel to the main extension direction of the bead (7) and wherein the recess (23, 23', 23") which extends continuously from the active region (8) to the bead (7) is arranged at an end of this row which faces the distributing structure.

9. A separator plate (2a, 2b) according to one of the preceding claims, with at least one barrier element of the previously mentioned type without a recess (23, 23', 23").

10. A separator plate (2a, 2b) according to one of the preceding claims, with a first port bead (12c) which completely encompasses the first through-opening (11c).

11. A separator plate (2a, 2b) according to one of the preceding claims, which is formed from a metal sheet, preferably from a stainless steel sheet, wherein at least one, more or all of the following elements is/are embossed into the separator plate (2a, 2b):
the bead (7) or beads (7);
the structures of the active region (8);
distributing structures of the distributing region (20);
the barrier elements (18, 18', 18"); and/or
the recesses (23, 23', 23").

12. A bipolar plate (2) for an electrochemical system (1) with a first separator plate (2a, 2b) according to one of the preceding claims and with a second separator plate (2a, 2b) according to one of the preceding claims, wherein both separator plates (2a, 2b) are connected to one another, wherein the first through-openings (11c) of the two separator plates (2a, 2b) are arranged in an aligned manner for forming a first through-opening (11c) of the bipolar plate (2), wherein the two separator plates (2a, 2b) enclose a cavity (22) for leading a coolant through the bipolar plate (2) and wherein the first through-opening (11c) of the bipolar plate (2) is in fluid connection with the cavity (22).

13. A bipolar plate (2) according to claim 12 with two separator plates (2a, 2b) according to one of the claims 2 or 3 or according to one of the claims 4 to 11,
to the extent that they refer back to claim 2, wherein the second through-openings of the two separator plates (2a, 2b) are arranged in an aligned manner for forming a second through-opening of the bipolar plate (2) and wherein the second through-opening of the bipolar plate (2) is in fluid connection with the cavity (22), and/or
wherein the barrier elements (18, 18', 18") of the first separator plate (2a, 2b) and the barrier elements (18, 18', 18") of the second separator plate (2a, 2b) are arranged at least regionally in an overlapping manner and wherein the recesses (23, 23', 23") of the barrier elements (18, 18', 18") of the first separator plate (2a, 2b) and the recesses (23, 23', 23") of the barrier elements (18, 18', 18") of the second separator plate (2a, 2b) are arranged at least partly offset parallel to the planar surface plane of the bipolar plate (2), and/or
wherein the barrier elements (18, 18', 18") of the first separator plate (2a, 2b) and the barrier elements (18, 18', 18") of the second separator plate (2a, 2b) are arranged at least regionally in an overlapping manner and wherein the recesses (23, 23', 23") of the barrier elements (18, 18', 18") of the first separator plate (2a, 2b) and the recesses (23, 23', 23") of the barrier elements (18, 18', 18") of the second separator plate (2a, 2b) are arranged in an at least partly overlapping manner.

14. A bipolar plate (2) according to claim 13, wherein the cavity (22) which is enclosed between the two separator plates (2a, 2b) comprises a first part-space and a second part-space, wherein the first part-space is enclosed between the active region (8) of the first separator plate (2a, 2b) and the active region (8) of the second separator plate (2a, 2b), wherein the second part-space is enclosed between the bead (7) of the first separator plate (2a, 2b) and the bead (7) of the second separator plate (2a, 2b), wherein the first through-opening (11c) of the bipolar plate (2) and the second through-opening of the bipolar plate (2) are connected via a first fluid connection which comprises the first part-space, and wherein the first through-opening (11c) of the bipolar plate (2) and the second through-opening of the bipolar plate (2) are connected via a second fluid connection which comprises the second part-space, wherein a minimal cross section A_{1,min} of the first fluid connection is larger than a minimal cross section A_{2,min} of the second fluid connection, wherein it is preferably the case that: A_{1,min} ≥ 10·A_{2,min}, particularly preferably A_{1,min} ≥ 25·A_{2,min}.

15. An electrochemical system (1) with a plurality of bipolar plates (2) according to one of the claims 12 to 14, which are arranged into a stack, wherein a respective membrane electrode assembly (MEA) is arranged between adjacent bipolar plates (2) of the stack, wherein each of the MEA in the active region (8) of the adjacent bipolar plates (2) comprises an ionomer (140) and preferably at least one gas diffusion layer (15), wherein each of the MEA preferably comprises a reinforced edge region which at least in regions overlaps with the barrier elements (18, 18', 18") of the bipolar plates (2), said bipolar plates being adjacent to the MEA.

## Revendications

1. Plaque de séparation (2a, 2b) pour un système électrochimique (1), notamment, pour une plaque bipolaire (2) d'un système électrochimique (1), comprenant :
un premier orifice de passage (11c) pour faire passer un agent de refroidissement à travers la plaque de séparation (2a, 2b) ;
une zone active (8) pourvue de structures permettant le guidage d'un milieu réactionnel le long d'un premier côté plat de la plaque de séparation (2a, 2b) et de structures permettant le guidage d'un agent de refroidissement le long d'un côté arrière de la zone active (8) sur le deuxième côté plat de la plaque de séparation (2a, 2b) ;
une moulure (7) formée d'un seul tenant avec la plaque de séparation (2a, 2b) permettant de rendre étanche au moins la zone active (8) ; et
des éléments formant barrière (18, 18', 18") formés d'un seul tenant avec la plaque de séparation (2a, 2b) ;
où les éléments formant barrière (18,18', 18")
a. sont disposés entre la zone active (8) et la moulure (7), et/ou
b. sont disposés entre une zone de distribution (20) de la plaque de séparation (2a, 2b) et la moulure (7), où le zone de distribution (20) est conçue pour le guidage de l'agent de refroidissement de l'orifice de passage (11c) vers le côté arrière de la zone active (8) ou du côté arrière de la zone active (8) vers l'orifice de passage (11c) sur le deuxième côté plat de la plaque de séparation (2a, 2b) ; et
où les éléments formant barrière (18,18', 18") sont conçus de telle manière qu'ils réduisent ou empêchent un écoulement du milieu réactionnel sur le premier côté plat de la plaque de séparation (2a, 2b) le long de la moulure (7) et à côté de la zone active (8) ;
**caractérisée en ce**
**que** la moulure (7) entoure totalement le premier orifice de passage (11c) et la zone active (8) ensemble et qu'au moins un des éléments formant barrière (18, 18', 18") est abaissé au moins par endroits, en particulier pour réduire ou empêcher un écoulement d'agent de refroidissement sur le deuxième côté plat de la plaque de séparation (2a, 2b) dans la zone de cet élément formant barrière entre le côté arrière de la zone active (8) et un espace interne (21) de la moulure (7), et/ou entre un côté arrière de la zone de distribution et l'espace interne (21) de la moulure (7), où la dénivellation (23, 23', 23"), au moins près d'un ou de plusieurs des éléments formant barrière (18, 18', 18"), est conçu de telle manière qu'elle réduit d'au moins 50 pourcents une section transversale d'une connexion formée par l'élément formant barrière déterminée perpendiculairement par rapport au plan de la surface plane de la plaque de séparation (2a, 2b) entre le côté arrière de la zone active (8) et l'espace interne (21) de la moulure (7) sur le deuxième côté plat de la plaque de séparation (2a, 2b).

2. Plaque de séparation (2a, 2b) selon la revendication 1, pourvue d'un deuxième orifice de passage pour faire passer un agent de refroidissements à travers la plaque de séparation (2a, 2b), où la moulure (7) entoure également totalement le deuxième orifice de passage.

3. Plaque de séparation (2a, 2b) selon la revendication 2, dans laquelle le premier orifice de passage (11c) et le deuxième orifice de passage sont disposés sur les faces de la zone active (8) situées l'une en face de l'autre.

4. Plaque de séparation (2a, 2b) selon l'une des revendications précédentes, dans laquelle la dénivellation (23, 23', 23") s'étend au moins près d'un ou de plusieurs des éléments formant barrière (18, 18', 18") au moins dans une direction sur l'élément formant barrière entier, et/ou
dans laquelle la dénivellation (23, 23', 23"), au moins près d'un ou de plusieurs des éléments formant barrière (18, 18', 18"), est espacée par rapport aux bords de l'élément formant barrière, et/ou
dans laquelle la dénivellation (23, 23', 23"), au moins près d'un ou de plusieurs des éléments formant barrière (18, 18', 18"), possède une forme allongée et est orientée parallèlement, ou essentiellement parallèlement, par rapport à l'extension principale de la moulure (7), et/ou
dans laquelle la dénivellation (23, 23', 23"), au moins près d'un ou de plusieurs des éléments formant barrière (18, 18', 18"), est conçue de telle manière qu'elle réduit d'au moins 70 pourcents, de préférence, d'au moins 90 pourcents, la section transversale déterminée perpendiculairement par rapport au plan de la surface plane de la plaque de séparation (2a, 2b) par la liaison formée par l'élément formant barrière entre le côté arrière de la zone active (8) et l'espace interne (21) de la moulure (7) sur le deuxième côté plat de la plaque de séparation (2a, 2b), et/ou
dans laquelle au moins un ou plusieurs des éléments formant barrière (18, 18', 18") atteint ou atteignent la zone active (8) et ou la moulure (7), et/ou
dans laquelle au moins un ou plusieurs des éléments formant barrière (18, 18', 18") est orienté ou sont orientés au moins par endroits de manière perpendiculaire par rapport à la direction de l'extension principale de la moulure (7).

5. Plaque de séparation (2a, 2b) selon l'une des revendications précédentes, dans laquelle au moins quelques uns des éléments formant barrière (18, 18', 18") voisins les uns des autres sont reliés ensemble, de préférence, respectivement, par une liaison orientée parallèlement par rapport à la direction d'extension principale de la moulure (7), et/ou, dans laquelle au moins un ou plusieurs des éléments formant barrière (18, 18', 18") est conçu ou sont conçus de telle manière qu'une section transversale déterminée perpendiculairement par rapport au plan de la surface plane de la plaque de séparation (2a, 2b) de l'élément formant barrière respectif s'amenuise vers la moulure (7), et en l'occurrence, de préférence d'au moins 50 pourcents, de manière particulièrement préférée, d'au moins 70 pourcents, et/ou
dans laquelle la section transversale s'amenuise (24) de préférence le long d'une direction parallèle par rapport au plan de la surface plane de la plaque de séparation (2a, 2b), de préférence parallèlement par rapport à l'extension principale de la moulure (7).

6. Plaque de séparation (2a, 2b) selon la revendication précédente, dans laquelle l'amenuisement (24) a lieu par étapes au moins pour un ou plusieurs des éléments formant barrière (18,18', 18").

7. Plaque de séparation (2a, 2b) selon l'une des revendications précédentes, pourvue d'une structure de distribution permettant de distribuer l'agent de refroidissement par le côté arrière de la zone active (8), où la structure de distribution va perpendiculairement par rapport au sens d'écoulement de l'agent de refroidissement le long du côté arrière de la zone active (8) jusqu'à une extrémité de la zone active (8) orientée vers la moulure (7), et/ou pourvue d'au moins une dénivellation (23, 23', 23"), qui s'étend perpendiculairement par rapport au sens d'écoulement de l'agent de refroidissement le long du côté arrière de la zone active (8) de part en part de la zone active (8) jusqu'à la moulure (7).

8. Plaque de séparation (2a, 2b) selon la revendication précédente, dans laquelle les éléments formant barrière (18, 18', 18") sont disposés dans une rangée parallèlement par rapport à la direction de l'extension principale de la moulure (7) et dans laquelle la dénivellation (23, 23', 23"), qui s'étend de part en part de la zone active (8) jusqu'à la moulure (7), est disposée à une extrémité de cette rangée orientée vers la structure de distribution.

9. Plaque de séparation (2a, 2b) selon l'une des revendications précédentes, pourvue d'au moins un élément formant barrière du type cité précédemment sans dénivellation (23, 23', 23").

10. Plaque de séparation (2a, 2b) selon l'une des revendications précédentes, avec une première moulure de port (12c), qui entoure totalement le premier orifice de passage (11c).

11. Plaque de séparation (2a, 2b) selon l'une des revendications précédentes, qui est formée à base d'une tôle métallique, de préférence, à base d'une tôle de métal noble, dans laquelle au moins un, plusieurs ou tous parmi les éléments suivants est gravé, respectivement, sont gravés, dans la plaque de séparation (2a, 2b) :
la moulure (7) ou les moulures (7) ;
les structures de la zone active (8) ;
des structures de distribution de la zone de distribution (20) ;
les éléments formant barrière (18, 18', 18") ; et/ou
les dénivellations (23, 23', 23").

12. Plaque bipolaire (2) pour un système électrochimique (1) pourvue d'une première plaque de séparation (2a, 2b) selon l'une des revendications précédentes et d'une deuxième plaque de séparation (2a, 2b) selon l'une des revendications précédentes, où les deux plaques de séparation (2a, 2b) sont reliées l'une à l'autre, où les premiers orifices de passage (11c) des deux plaques de séparation (2a, 2b) sont disposés en vis-à-vis pour la formation d'un premier orifice de passage (11c) de la plaque bipolaire (2), où les deux plaques de séparation (2a, 2b) comprennent un espace creux (22) pour le passage d'un agent de refroidissement à travers la plaque bipolaire (2) et où le premier orifice de passage (11c) de la plaque bipolaire (2) est en communication fluidique avec l'espace creux (22).

13. Plaque bipolaire (2) selon la revendication 12, munie de deux plaques de séparation (2a, 2b) selon l'une des revendications 2 ou 3 ou selon l'une des revendications 4 à 11,
dans la mesure où elle dépend de la revendication 2, dans laquelle les deuxièmes orifices de passage des deux plaques de séparation (2a, 2b) sont disposés en vis-à-vis pour la formation d'un deuxième orifice de passage de la plaque bipolaire (2) et dans laquelle le deuxième orifice de passage de la plaque bipolaire (2) est en communication fluidique avec l'espace creux (22), et/ou
dans laquelle les éléments formant barrière (18, 18', 18") de la première plaque de séparation (2a, 2b) et les éléments formant barrière (18, 18', 18") de la deuxième plaque de séparation (2a, 2b) sont disposés superposés au moins par endroits et dans laquelle les dénivellations (23, 23', 23") des éléments formant barrière (18, 18', 18") de la première plaque de séparation (2a, 2b) et les dénivellations (23, 23', 23") des éléments formant barrière (18, 18', 18") de la deuxième plaque de séparation (2a, 2b) sont disposées parallèlement par rapport au plan de la surface plane de la plaque bipolaire (2) au moins partiellement décalées, et/ou
dans laquelle les éléments formant barrière (18, 18', 18") de la première plaque de séparation (2a, 2b) et les éléments formant barrière (18, 18', 18") de la deuxième plaque de séparation (2a, 2b) sont disposés superposés au moins par endroits et dans laquelle les dénivellations (23, 23', 23") des éléments formant barrière (18, 18', 18") de la première plaque de séparation (2a, 2b) et les dénivellations (23, 23', 23") des éléments formant barrière (18, 18', 18") de la deuxième plaque de séparation (2a, 2b) sont disposées au moins partiellement superposées.

14. Plaque bipolaire (2) selon la revendication 13, dans laquelle l'espace creux (22) renfermé entre les deux plaques de séparation (2a, 2b) comprend un premier espace partiel et un deuxième espace partiel, où le premier espace partiel est renfermé entre la zone active (8) de la première plaque de séparation (2a, 2b) et la zone active (8) de la deuxième plaque de séparation (2a, 2b), où le deuxième espace partiel est compris entre la moulure (7) de la première plaque de séparation (2a, 2b) et la moulure (7) de la deuxième plaque de séparation (2a, 2b), où le premier orifice de passage (11c) de la plaque bipolaire (2) et le deuxième orifice de passage de la plaque bipolaire (2) sont reliés par le biais d'une première connexion fluidique, qui comprend le premier espace partiel, et où le premier orifice de passage (11c) de la plaque bipolaire (2) et le deuxième orifice de passage de la plaque bipolaire (2) sont reliés par le biais d'une deuxième connexion fluidique qui comprend le deuxième espace partiel, où une section transversale minimale A_{1, min} de la première connexion fluidique est supérieure à une section transversale minimale A_{2, min} la deuxième connexion fluidique, où l'on a de préférence : A_{1,min} ≥ 10·A_{2,min} en particulier, de préférence A_{1,min} ≥ 25·A_{2,min}.

15. Système électrochimique (1) avec un grand nombre de plaques bipolaires (2) selon l'une des revendications 12 à 14, qui sont disposées dans une pile, où, entre des plaques bipolaires (2) voisines de la pile, une unité d'électrodes membranaires (MEA) est disposée respectivement, où la MEA présente dans la zone active (8) de la plaque bipolaire (2) limitrophe, respectivement un ionomère (140) et de préférence au moins une couche de gaz de diffusion (15), où la MEA présente de préférence une zone de bordure renforcée, qui se superpose au moins par endroits avec les éléments formant barrière (18, 18', 18") des plaques bipolaires (2) limitrophes de la MEA.
